# EUROPEAN PATENT SPECIFICATION

(11) **EP 4 120 604 B1**
(45) Date of publication and mention of the grant of the patent: **11.06.2025**
(21) Application number: 21785582.4
(22) Date of filing: 08.04.2021
(51) Int. Cl.: H04L 1/16

(54) **DOWNLINK DATA SENDING METHOD AND APPARATUS, AND DOWNLINK DATA RECEIVING METHOD AND APPARATUS**
VERFAHREN UND VORRICHTUNG ZUM SENDEN VON DOWNLINK-DATEN SOWIE VERFAHREN UND VORRICHTUNG ZUM EMPFANGEN VON DOWNLINK-DATEN
PROCÉDÉ ET APPAREIL D'ENVOI DE DONNÉES DE LIAISON DESCENDANTE, ET PROCÉDÉ ET APPAREIL DE RÉCEPTION DE DONNÉES DE LIAISON DESCENDANTE

(30) Priority: 10.04.2020 CN 202010281126
(43) Date of publication of application: 18.01.2023
(73) Proprietor: Huawei Technologies Co., Ltd., Shenzhen, Guangdong 518129, (CN)
(72) Inventor: MA, Ruixiang, Shenzhen, Guangdong 518129 (CN); GUAN, Lei, Shenzhen, Guangdong 518129 (CN)
(74) Representative: Grünecker Patent- und Rechtsanwälte PartG mbB
(86) International application number: PCT/CN2021/085979
(87) International publication number: WO 2021/204207

(56) References cited:
- WO-A1-2017/156788
- CN-A- 109 600 844
- CN-A- 110 086 579
- LG ELECTRONICS: "Summary#3 on maintenance of other aspects for URLLC/IIOT", vol. RAN WG1, no. e-Meeting; 20200224 - 20200306, 5 March 2020 (2020-03-05), XP052344288, Retrieved from the Internet <URL:https://ftp.3gpp.org/tsg_ran/WG1_RL1/TSGR1_100_e/Docs/R1-2001225.zip R1-2001225 Summary#3 on maintenance of other aspects for URLLC,IIOT.docx> [retrieved on 20200305]
- LG ELECTRONICS: "Summary on maintenance of other aspects for URLLC/IIOT", 3GPP TSG RAN WG1 #100 R1-2000677, 6 March 2020 (2020-03-06), XP051853653

## Description

This application claims priority to Chinese Patent Application No. 202010281126.6, filed with the China National Intellectual Property Administration on April 10, 2020 and entitled "DOWNLINK DATA SENDING METHOD, DOWNLINK DATA RECEIVING METHOD, AND APPARATUS".

### TECHNICAL FIELD

This application relates to the communication field, and in particular, to a downlink data sending method, a downlink data receiving method, and an apparatus.

### BACKGROUND

To cope with explosive growth of mobile data traffic, massive mobile communication device connections, and various emerging new services, a fifth generation (fifth generation, 5G) mobile communication system emerges. For tactile interactive applications such as wireless control in an industrial manufacturing or production process, motion control of driverless cars and drones, remote repair, and remote surgery, the International Telecommunication Union (International Telecommunication Union, ITU) defines ultra-reliable and low-latency communications (ultra-reliable and low-latency communications, URLLC). A URLLC service is mainly characterized by ultra-high reliability, a low latency, a small data transmission amount, and burstiness.
LG ELECTRONICS, "Summary#3 on maintenance of other aspects for URLLC/IIOT", 3GPP DRAFT, R1-2001225, vol. RAN WG1, no. e-Meeting 20200224-20200306, 5 March 2020 discloses a technique of handling the problem of SPS PDSCH collision wherein a UE is not required to decode SPS PDSCHs other than the one of collided SPS PDSCHs that has the lowest SPS configuration index and either a) the UE only receives and decodes the particular one of collided SPS PDSCHs that has the lowest SPS configuration index or b) the UE receives and decodes one or more SPS PDSCHs within a group of overlapping SPS PDSCHs.

To ensure requirements for ultra-high reliability and a low latency, a physical downlink shared channel (physical downlink shared channel, PDSCH) may be repeatedly transmitted in a time unit (for example, a slot or a sub-slot). Usually, after receiving downlink data, a terminal device determines a second time unit based on a first time unit of the last received PDSCH repetition and an offset value K1, to feed back a decoding result of the downlink data to a network device in the second time unit. However, if there are a plurality of overlapping PDSCHs in the first time unit, because a capability of the terminal device is limited, the terminal device may receive only a part of the PDSCHs. If the last repeatedly transmitted PDSCH is not received, feedback information fails to be sent, and consequently, a retransmission probability of the downlink data is increased, and data transmission efficiency is reduced.

### SUMMARY

This application provides a downlink data sending method, a downlink data receiving method, and an apparatus, to resolve a problem that feedback information fails to be sent, and consequently, a retransmission probability of downlink data is increased, and data transmission efficiency is reduced.

To achieve the foregoing objective, the invention is defined by the appended claims.

The following technical solutions are discussed in this application.

According to a first aspect, this application provides a downlink data sending method. The method may be applied to a network device, or may be applied to a communication apparatus that can support the network device in implementing the method. For example, the communication apparatus includes a chip system. The method includes: When determining that at least two of P PDSCHs in a first time unit overlap in time domain, the network device selects M PDSCHs that do not overlap in time domain from the P PDSCHs; sends data to a terminal device only on the M PDSCHs; and receives feedback information corresponding to the M PDSCHs from the terminal device. A first PDSCH is the last repetition in PDSCH repetitions of first data, and the first PDSCH is a PDSCH other than the M PDSCHs in the P PDSCHs and overlaps at least one of the M PDSCHs in time domain; and the method further comprises: when the first data is sent to the terminal device on a second PDSCH, receiving feedback information for the first data from the terminal device in a feedback time unit corresponding to the first PDSCH, wherein the second PDSCH is any repetition of the first data before the first PDSCH.

The P PDSCHs include a PDSCH that has no corresponding physical downlink control channel (physical downlink control channel, PDCCH), and P is an integer greater than 1. M is equal to 1, or M is an integer greater than 1 and less than P.

In addition, a first PDSCH is a PDSCH other than the M PDSCHs in the P PDSCHs. It may be understood that if the first PDSCH overlaps at least one of the M PDSCHs, the network device does not send data to the terminal device on the first PDSCH. A time domain position of the first PDSCH is after a time domain position of the second PDSCH.

According to the downlink data sending method provided in this application, when at least two of P PDSCHs in one slot overlap in time domain, the network device cancels sending of partially overlapping PDSCHs. If one first PDSCH whose sending is canceled is the last repetition in the PDSCH repetitions of the first data, and the network device sends another repetition in the PDSCH repetitions of the first data before the first PDSCH to the terminal device, the network device receives the feedback information for the first data from the terminal device. In this way, a retransmission probability of the first data is reduced, and data transmission efficiency is improved.

Optionally, when at least two of the P PDSCHs in the first time unit overlap in time domain, that the network device sends data to a terminal device may further include the following possible cases.

Case 1: When the network device sends second data to the terminal device on a fourth PDSCH, the network device sends the second data to the terminal device on a third PDSCH. It should be understood that, the M PDSCHs include the third PDSCH. The third PDSCH and the fourth PDSCH each are one repetition in PDSCH repetitions of the second data, and a time domain position of the third PDSCH is after a time domain position of the fourth PDSCH. In other words, for a plurality of repeated PDSCH transmissions of the second data, if the network device sends one of the repeated PDSCH transmissions, a priority of a subsequent repeated transmission of the second data is higher than a priority of a PDSCH carrying other data, to ensure reliable transmission of the second data. Usually, repeated transmission is performed to improve data transmission reliability. A priority of a repeatedly transmitted PDSCH is preferentially ensured, so that reliable transmission of data using a repeated transmission mechanism can be ensured.

Case 2: If the network device does not send the 1^{st} repeated PDSCH in PDSCH repetitions, the network device does not send any repeated PDSCH after the 1^{st} repeated PDSCH. For example, a fifth PDSCH is the 1^{st} repetition in the PDSCH repetitions, the first PDSCH is one repetition after the 1^{st} repetition in the PDSCH repetitions, and a time domain position of the first PDSCH is after a time domain position of the fifth PDSCH. When the network device does not send the fifth PDSCH to the terminal device, the network device does not send the first PDSCH to the terminal device.

Optionally, the network device may select the M PDSCHs from the P PDSCHs according to a conventional technology. For example, the network device selects a PDSCH with a smallest identifier from the P PDSCHs. Certainly, the network device may alternatively select the M PDSCHs from the P PDSCHs in another manner. The following describes several possible implementations in which the network device selects the M PDSCHs from the P PDSCHs

In a possible implementation, the M PDSCHs are M PDSCHs in N PDSCHs, each of the N PDSCHs belongs to one of N PDSCH groups, each PDSCH in the N PDSCH groups is one of the P PDSCHs, each of the P PDSCHs belongs to one of the N PDSCH groups, and N is an integer greater than or equal to M and less than or equal to P; PDSCHs in an i^{th} PDSCH group in the N PDSCH groups overlap each other; and an i^{th} PDSCH in the N PDSCHs is a PDSCH with a smallest identifier value in the i^{th} PDSCH group, and i is a positive integer less than or equal to N.

In another possible implementation, the P PDSCHs further include a dynamically scheduled PDSCH, the M PDSCHs are M PDSCHs in N PDSCHs, each of the N PDSCHs belongs to one of N PDSCH groups, each PDSCH in the N PDSCH groups is one of the P PDSCHs, each of the P PDSCHs belongs to one of the N PDSCH groups, N is an integer greater than or equal to M and less than or equal to P, and PDSCHs in an i^{th} PDSCH group in the N PDSCH groups overlap each other; an i^{th} PDSCH in the N PDSCHs is a PDSCH in the i^{th} PDSCH group, and i is a positive integer less than or equal to N; and when the i^{th} PDSCH group includes a dynamically scheduled PDSCH, the i^{th} PDSCH is the dynamically scheduled PDSCH; and/or when the i^{th} PDSCH group does not include a dynamically scheduled PDSCH, the i^{th} PDSCH is a PDSCH with a smallest identifier value in the i^{th} PDSCH group.

The N PDSCH groups are determined based on end symbols of a part of the P PDSCHs.

Specifically, that the N PDSCH groups are determined based on end symbols of a part of the P PDSCHs specifically includes:
step 1: denoting the P PDSCHs as a PDSCH set, where k is a positive integer less than or equal to N, and an initial value of k is equal to 1;
step 2: denoting a sixth PDSCH and a PDSCH that is in the PDSCH set and that overlaps the sixth PDSCH as a k^{th} PDSCH group in the N PDSCH groups, where an index value of an end symbol of the sixth PDSCH is the smallest in index values of end symbols of PDSCHs in the PDSCH set; and
step 3: denoting a PDSCH other than the k^{th} PDSCH group in the PDSCH set as a PDSCH set, setting k+1=k, and repeating step 2 until the PDSCH set is empty.

Compared with the conventional technology in which the network device determines, through one-by-one comparison, whether there is an overlapping PDSCH, and selects a non-overlapping PDSCH, and consequently, calculation complexity of the network device is high, and power consumption is high, in the method provided in this embodiment of this application, when a plurality of PDSCHs overlap, a PDSCH with a smallest group selection identifier is received, thereby reducing processing complexity and power consumption of the network device.

Optionally, the network device selects N PDSCHs that have no corresponding PDCCHs. If the N PDSCHs do not overlap each other, the network device does not need to perform selection, and N is equal to M. If two of the N PDSCHs overlap in time domain, it indicates that an overlapping PDSCH that has no corresponding PDCCH exists in the PDSCHs that are selected by the network device and that have no corresponding PDCCHs. In this case, N is greater than M, and the network device continues to select a PDSCH by using the method provided in this embodiment of this application. For example, the M PDSCHs are M PDSCHs in Q PDSCHs, each of the Q PDSCHs belongs to one of Q PDSCH groups, each PDSCH in the Q PDSCH groups is one of the N PDSCHs, each of the N PDSCHs belongs to one of the Q PDSCH groups, and Q is a positive integer greater than or equal to M and less than N; PDSCHs in a j^{th} PDSCH group in the Q PDSCH groups overlap each other; and a j^{th} PDSCH in the Q PDSCHs is a PDSCH with a smallest identifier value in the j^{th} PDSCH group, and j is a positive integer less than or equal to Q.

Optionally, if the network device selects N PDSCHs and the N PDSCHs do not overlap each other, the network device does not need to perform selection again, and N is equal to M. If two of the N PDSCHs overlap in time domain, it indicates that an overlapping PDSCH exists in the PDSCHs selected by the network device. In this case, N is greater than M, and the network device continues to select a PDSCH by using the method provided in this embodiment of this application. For example, the M PDSCHs are M PDSCHs in Q PDSCHs, each of the Q PDSCHs belongs to one of Q PDSCH groups, each PDSCH in the Q PDSCH groups is one of the N PDSCHs, each of the N PDSCHs belongs to one of the Q PDSCH groups, and Q is an integer greater than or equal to M and less than N; PDSCHs in a j^{th} PDSCH group in the Q PDSCH groups overlap each other; a j^{th} PDSCH in the Q PDSCHs is a PDSCH in the j^{th} PDSCH group, and j is a positive integer less than or equal to Q; and when the j^{th} PDSCH group includes a dynamically scheduled PDSCH, the j^{th} PDSCH is the dynamically scheduled PDSCH; and/or when the j^{th} PDSCH group does not include a dynamically scheduled PDSCH, the j^{th} PDSCH is a PDSCH with a smallest identifier value in the j^{th} PDSCH group.

In another possible implementation, the P PDSCHs further include a dynamically scheduled PDSCH, the M PDSCHs include the dynamically scheduled PDSCH and R PDSCHs that have no corresponding PDCCHs, the R PDSCHs that have no corresponding PDCCHs are R PDSCHs with smallest identifiers that have no corresponding PDCCHs and that are not the dynamically scheduled PDSCH and a PDSCH that has no corresponding PDCCH and that overlaps the dynamically scheduled PDSCH in the P PDSCHs, and R is less than M.

Optionally, the PDSCH that has no corresponding PDCCH and that overlaps the dynamically scheduled PDSCH is not sent to the terminal device.

Because the network device first cancels the PDSCH that overlaps the dynamically scheduled PDSCH, and then sends a PDSCH with a smallest identifier in remaining PDSCHs that have no corresponding PDCCHs, it is ensured that as many PDSCHs that have no corresponding PDCCHs as possible are sent, thereby improving resource utilization. In addition, because data can be sent in time, a data transmission latency is reduced.

According to a second aspect, this application provides a downlink data receiving method. The method is a method corresponding to the first aspect. For beneficial effects of the method, directly refer to the first aspect. The method may be applied to a terminal device, or may be applied to a communication apparatus that can support the terminal device in implementing the method. For example, the communication apparatus includes a chip system. The method includes: When determining that at least two of P PDSCHs in a first time unit overlap in time domain, the terminal device selects M PDSCHs that do not overlap in time domain from the P PDSCHs; receives data from a network device only on the M PDSCHs; and sends feedback information corresponding to the M PDSCHs to the network device. A first PDSCH is the last repetition in PDSCH repetitions of first data, and the first PDSCH is a PDSCH other than the M PDSCHs in the P PDSCHs and overlaps at least one of the M PDSCHs in time domain; and the method further comprises: when the first data from the network device is received on a second PDSCH, sending feedback information for the first data to the network device in a feedback time unit corresponding to the first PDSCH, wherein the second PDSCH is any repetition of the first data before the first PDSCH.

The P PDSCHs include a PDSCH that has no corresponding PDCCH, and P is an integer greater than 1. M is equal to 1, or M is an integer greater than 1 and less than P.

In addition, a first PDSCH is a PDSCH other than the M PDSCHs in the P PDSCHs. It may be understood that if the first PDSCH overlaps at least one of the M PDSCHs, the terminal device does not receive data from the network device on the first PDSCH. A time domain position of the first PDSCH is after a time domain position of the second PDSCH.

According to the downlink data receiving method provided in this application, when at least two of P PDSCHs in one slot overlap in time domain, the network device cancels sending of partially overlapping PDSCHs. If one first PDSCH whose sending is canceled is the last repetition in the PDSCH repetitions of the first data, and the terminal device receives another repetition in the PDSCH repetitions of the first data before the first PDSCH, the terminal device still sends the feedback information for the first data to the network device. In this way, a retransmission probability of the first data is reduced, and data transmission efficiency is improved.

Optionally, when at least two of the P PDSCHs in the first time unit overlap in time domain, that the terminal device receives data from a network device may further include the following possible cases.

Case 1: When the terminal device receives second data from the network device on a fourth PDSCH, the terminal device receives the second data from the network device on a third PDSCH. It should be understood that, the M PDSCHs include the third PDSCH. The third PDSCH and the fourth PDSCH each are one repetition in PDSCH repetitions of the second data, and a time domain position of the third PDSCH is after a time domain position of the fourth PDSCH. In other words, for a plurality of repeated PDSCH transmissions of the second data, if the terminal device receives one of the repeated PDSCH transmissions, a priority of a subsequent repeated transmission of the second data is higher than a priority of another PDSCH, to ensure reliable transmission of the second data. Usually, repeated transmission is performed to improve data transmission reliability. A priority of a repeatedly transmitted PDSCH is preferentially ensured, so that reliable transmission of data using a repeated transmission mechanism can be ensured.

Case 2: If the terminal device does not receive the 1^{st} repeated PDSCH in PDSCH repetitions, the terminal device does not receive any repeated PDSCH after the 1^{st} repeated PDSCH. For example, a fifth PDSCH is the 1^{st} repetition in the PDSCH repetitions, the first PDSCH is one repetition after the 1^{st} repetition in the PDSCH repetitions, and a time domain position of the first PDSCH is after a time domain position of the fifth PDSCH. When the terminal device does not receive the fifth PDSCH from the network device, the terminal device does not receive the first PDSCH.

Because data carried on the 1^{st} repeated PDSCH may be self-decoded, if the 1^{st} repeated PDSCH is not received, data on a subsequent PDSCH may not be correctly decoded after being parsed and received. Therefore, the 1^{st} repeated PDSCH is canceled, and a plurality of subsequent repeated PDSCHs are also canceled, thereby saving resources and improving transmission efficiency.

Optionally, the terminal device may select the M PDSCHs from the P PDSCHs according to a conventional technology. For example, the terminal selects a PDSCH with a smallest identifier from the P PDSCHs. Certainly, the terminal device may alternatively select the M PDSCHs from the P PDSCHs in another manner. The following describes several possible implementations in which the terminal device selects the M PDSCHs from the P PDSCHs

In a possible implementation, the M PDSCHs are M PDSCHs in N PDSCHs, each of the N PDSCHs belongs to one of N PDSCH groups, each PDSCH in the N PDSCH groups is one of the P PDSCHs, each of the P PDSCHs belongs to one of the N PDSCH groups, and N is an integer greater than or equal to M and less than or equal to P; PDSCHs in an i^{th} PDSCH group in the N PDSCH groups overlap each other; and an i^{th} PDSCH in the N PDSCHs is a PDSCH with a smallest identifier value in the i^{th} PDSCH group, and i is a positive integer less than or equal to N.

In another possible implementation, the P PDSCHs further include a dynamically scheduled PDSCH, the M PDSCHs are M PDSCHs in N PDSCHs, each of the N PDSCHs belongs to one of N PDSCH groups, each PDSCH in the N PDSCH groups is one of the P PDSCHs, each of the P PDSCHs belongs to one of the N PDSCH groups, N is an integer greater than or equal to M and less than or equal to P, and PDSCHs in an i^{th} PDSCH group in the N PDSCH groups overlap each other; an i^{th} PDSCH in the N PDSCHs is a PDSCH in the i^{th} PDSCH group, and i is a positive integer less than or equal to N; and when the i^{th} PDSCH group includes a dynamically scheduled PDSCH, the i^{th} PDSCH is the dynamically scheduled PDSCH; and/or when the i^{th} PDSCH group does not include a dynamically scheduled PDSCH, the i^{th} PDSCH is a PDSCH with a smallest identifier value in the i^{th} PDSCH group.

The N PDSCH groups are determined based on end symbols of a part of the P PDSCHs.

Specifically, that the N PDSCH groups are determined based on end symbols of a part of the P PDSCHs specifically includes:
step 1: denoting the P PDSCHs as a PDSCH set, where k is a positive integer less than or equal to N, and an initial value of k is equal to 1;
step 2: denoting a sixth PDSCH and a PDSCH that is in the PDSCH set and that overlaps the sixth PDSCH as a k^{th} PDSCH group in the N PDSCH groups, where an index value of an end symbol of the sixth PDSCH is the smallest in index values of end symbols of PDSCHs in the PDSCH set; and
step 3: denoting a PDSCH other than the k^{th} PDSCH group in the PDSCH set as a PDSCH set, setting k+1=k, and repeating step 2 until the PDSCH set is empty.

Compared with the conventional technology in which the terminal device determines, through one-by-one comparison, whether there is an overlapping PDSCH, and selects a non-overlapping PDSCH, and consequently, calculation complexity of the terminal device is high, and power consumption is high, in the method provided in this embodiment of this application, when a plurality of PDSCHs overlap, a PDSCH with a smallest group selection identifier is received, thereby reducing processing complexity and power consumption of the terminal device.

Optionally, the terminal device selects N PDSCHs that have no corresponding PDCCHs. If the N PDSCHs do not overlap each other, the terminal device does not need to perform selection, and N is equal to M. If two of the N PDSCHs overlap in time domain, it indicates that an overlapping PDSCH exists in the PDSCHs selected by the terminal device. In this case, N is greater than M, and the terminal device continues to select a PDSCH by using the method provided in this embodiment of this application. For example, the M PDSCHs are M PDSCHs in Q PDSCHs, each of the Q PDSCHs belongs to one of Q PDSCH groups, each PDSCH in the Q PDSCH groups is one of the N PDSCHs, each of the N PDSCHs belongs to one of the Q PDSCH groups, and Q is an integer greater than or equal to M and less than N; PDSCHs in a j^{th} PDSCH group in the Q PDSCH groups overlap each other; and a j^{th} PDSCH in the Q PDSCHs is a PDSCH with a smallest identifier value in the j^{th} PDSCH group, and j is a positive integer less than or equal to Q.

Optionally, if the terminal device selects N PDSCHs and the N PDSCHs do not overlap each other, the terminal device does not need to perform selection again, and N is equal to M. If two of the N PDSCHs overlap in time domain, it indicates that an overlapping PDSCH exists in the PDSCHs selected by the terminal device. In this case, N is greater than M, and the terminal device continues to select a PDSCH by using the method provided in this embodiment of this application. For example, the M PDSCHs are M PDSCHs in Q PDSCHs, each of the Q PDSCHs belongs to one of Q PDSCH groups, each PDSCH in the Q PDSCH groups is one of the N PDSCHs, each of the N PDSCHs belongs to one of the Q PDSCH groups, and Q is an integer greater than or equal to M and less than N; PDSCHs in a j^{th} PDSCH group in the Q PDSCH groups overlap each other; a j^{th} PDSCH in the Q PDSCHs is a PDSCH in the j^{th} PDSCH group, and j is a positive integer less than or equal to Q; and when the j^{th} PDSCH group includes a dynamically scheduled PDSCH, the j^{th} PDSCH is the dynamically scheduled PDSCH; and/or when the j^{th} PDSCH group does not include a dynamically scheduled PDSCH, the j^{th} PDSCH is a PDSCH with a smallest identifier value in the j^{th} PDSCH group.

In another possible implementation, the P PDSCHs further include a dynamically scheduled PDSCH, the M PDSCHs include the dynamically scheduled PDSCH and R PDSCHs that have no corresponding PDCCHs, the R PDSCHs that have no corresponding PDCCHs are R PDSCHs with smallest identifiers that have no corresponding PDCCHs and that are not the dynamically scheduled PDSCH and a PDSCH that has no corresponding PDCCH and that overlaps the dynamically scheduled PDSCH in the P PDSCHs, and R is less than M.

Optionally, the PDSCH that has no corresponding PDCCH and that overlaps the dynamically scheduled PDSCH is not received from the network device.

Because the terminal device first cancels the PDSCH that overlaps the dynamically scheduled PDSCH, and then receives a PDSCH with a smallest identifier in remaining PDSCHs that have no corresponding PDCCHs, it is ensured that as many PDSCHs that have no corresponding PDCCHs as possible are received, thereby improving resource utilization. In addition, because data can be received in time, a data transmission latency is reduced.

According to a third aspect, a communication apparatus is provided. The communication apparatus may be the network device in the foregoing method embodiments, or a chip disposed in the network device. The communication apparatus includes an interface circuit and a processor; and optionally, further includes a memory. The memory is configured to store a computer program or instructions. The processor is coupled to the memory and the interface circuit. When the processor executes the computer program or the instructions, the communication apparatus is enabled to perform the method performed by the network device in the first aspect.

According to a fourth aspect, a communication apparatus is provided. The communication apparatus may be the terminal device in the foregoing method embodiments, or a chip disposed in the terminal device. The communication apparatus includes an interface circuit and a processor; and optionally, further includes a memory. The memory is configured to store a computer program or instructions. The processor is coupled to the memory and the interface circuit. When the processor executes the computer program or the instructions, the communication apparatus is enabled to perform the method performed by the terminal device in the second aspect.

According to a fifth aspect, a computer program product is provided. The computer program product includes computer program code. When the computer program code is run, the method performed by the network device in the first aspect is performed.

According to an sixth aspect, a computer program product is provided. The computer program product includes computer program code. When the computer program code is run, the method performed by the terminal device in the second aspect is performed.

According to an seventh aspect, this application provides a computer-readable storage medium. The computer-readable storage medium stores a computer program. When the computer program is run, the method performed by the network device in the first aspect is implemented.

According to a eighth aspect, this application provides a computer-readable storage medium. The computer-readable storage medium stores a computer program. When the computer program is run, the method performed by the terminal device in the second aspect is implemented.

In this application, names of the terminal device, the network device, and the communication apparatus constitute no limitation on the devices. During actual implementation, the devices may have other names. The scope of protection is defined by the appended claims.

### BRIEF DESCRIPTION OF DRAWINGS

FIG. 1 is a schematic diagram of an architecture of a mobile communication system according to an embodiment of this application;
FIG. 2 is a schematic diagram of PDSCH sending according to an embodiment of this application;
FIG. 3 is a flowchart of sending a PDSCH in an SPS manner according to an embodiment of this application;
FIG. 4 is a schematic diagram of PDSCH sending according to an embodiment of this application;
FIG. 5 is a schematic diagram of PDSCH sending according to an embodiment of this application;
FIG. 6 is a schematic diagram of feedback information sending in a conventional technology;
FIG. 7 is a schematic diagram of a time domain position of a PDSCH of an SPS configuration according to an embodiment of this application;
FIG. 8 is a schematic diagram of feedback information sending in a conventional technology;
FIG. 9 is a flowchart of a downlink data sending and receiving method according to an embodiment of this application;
FIG. 10 is a schematic diagram of feedback information sending according to an embodiment of this application;
FIG. 11 is a schematic diagram of time domain positions for sending and receiving PDSCHs according to an embodiment of this application;
FIG. 12 is a schematic diagram of time domain positions for sending and receiving PDSCHs according to an embodiment of this application;
FIG. 13(a) and FIG. 13(b) are schematic diagrams of PDSCH grouping according to an embodiment of this application;
FIG. 14 is a schematic diagram of PDSCH grouping according to an embodiment of this application;
FIG. 15 is a schematic diagram of PDSCH grouping according to an embodiment of this application;
FIG. 16 is a schematic diagram of a structure of a communication apparatus according to an embodiment of this application; and
FIG. 17 is a schematic diagram of a structure of a communication apparatus according to an embodiment of this application.

### DESCRIPTION OF EMBODIMENTS

In this specification, the claims, and the accompanying drawings of this application, the terms "first", "second", "third", and the like are intended to distinguish between different objects but are not intended to limit a particular order.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example" or "for example" or the like is intended to present a relative concept in a specific manner.

To meet a latency requirement of a service, a time domain granularity of resource scheduling in a 5G mobile communication system needs to be more flexible. Specifically, in 5G, both a time domain scheduling granularity of a slot level and a time domain scheduling granularity of a mini-time unit are supported. For example, scheduling at a time unit granularity is mainly used for an eMBB service, and scheduling at a mini-time unit granularity is mainly used for a URLLC service. A time unit and a mini-time unit are general descriptions. A specific example may be as follows: The time unit may be a slot, and the mini-time unit may be a sub-slot (sub-slot), a non-slot (non-slot-based), or a mini-slot (mini-slot); or the time unit may be a subframe, and the mini-time unit may be a minisubframe; or the time unit may be a sub-slot (sub-slot), a non-slot (non-slot-based), or a mini-slot (mini-slot). In this application, an example in which the time unit is a slot is used below for description. For example, one slot may include 14 time domain symbols, and a quantity of time domain symbols included in one mini-slot is less than 14, for example, 2, 3, 4, 5, 6, or 7. Alternatively, one slot may include seven time domain symbols, and a quantity of time domain symbols included in one mini-slot is less than 7, for example, 2 or 4. A specific value is not limited. The time domain symbol herein may be an orthogonal frequency division multiplexing (orthogonal frequency division multiplexing, OFDM) symbol, or may be a single-carrier frequency division multiplexing (single-carrier frequency division multiplexing, SC-FDM) symbol. Unless otherwise specified, symbols in embodiments of this application are all time domain symbols. For a slot with a subcarrier spacing of 15 kilohertz (kilohertz, kHz), 12 or 14 time domain symbols are included, and a corresponding time length is 1 ms; and for a slot with a subcarrier spacing of 60 kHz, a corresponding time length is shortened to 0.25 ms.

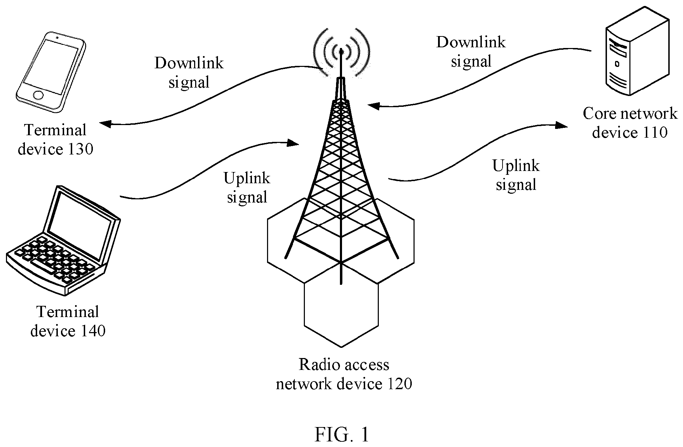

FIG. 1 is a schematic diagram of an architecture of a mobile communication system to which an embodiment of this application is applied. As shown in FIG. 1, the mobile communication system includes a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be independent and different physical devices, or a function of the core network device and a logical function of the radio access network device may be integrated into a same physical device, or a part of functions of the core network device and a part of functions of the radio access network device may be integrated into one physical device. The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminal devices included in the mobile communication system are not limited in this embodiment of this application.

The radio access network device is an access device that is used by the terminal device to access the mobile communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, an access node in a Wi-Fi system, and the like, or may be a module or a unit that completes a part of functions of a base station, for example, may be a central unit (central unit, CU) or a distributed unit (distributed unit, DU). A specific technology and a specific device form that are used by the radio access network device are not limited in embodiments of this application. In this application, the radio access network device is referred to as a network device for short. Unless otherwise specified, network devices are all radio access network devices. For example, the radio access network device 120 may be a network device 120.

The terminal device may also be referred to as a terminal, user equipment (user equipment, UE), a mobile station, a mobile terminal, or the like. The terminal device may be a mobile phone, a tablet computer (Pad), a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

This application may be applied to a 5G new radio (new radio, NR) system, or may be applied to another communication system, provided that in the communication system, an entity needs to send transmission direction indication information, and another entity needs to receive the indication information and determine a transmission direction within a specific time period based on the indication information.

The network device and the terminal device may be deployed on the land, including an indoor device, an outdoor device, a handheld device, or a vehicle-mounted device, may be deployed on the water surface; or may be deployed on a plane, a balloon, and a satellite in the air. Application scenarios of the network device and the terminal device are not limited in embodiments of this application.

The network device and the terminal device may communicate with each other by using a licensed spectrum (licensed spectrum), may communicate with each other by using an unlicensed spectrum (unlicensed spectrum), or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

It may be understood that, in embodiments of this application, a physical downlink control channel (physical downlink control channel, PDCCH), a PDSCH, and a physical uplink control channel (physical uplink control channel, PUCCH) are merely used as examples of a downlink control channel, a downlink data channel, and an uplink control channel. In different systems and different scenarios, the data channel may have different names. This is not limited in embodiments of this application.

For clear and brief description of the following embodiments, a related technology is briefly described first.

Usually, the network device may send downlink data to the terminal device in a dynamic scheduling manner. Specifically, each time before sending the downlink data to the terminal device, the network device sends one piece of indication information to the terminal device, to indicate to the terminal device how to receive the downlink data from the network device. The indication information may be downlink control information (downlink control information, DCI).

That the network device sends the DCI to the terminal device may also be understood as that the network device sends the DCI to the terminal device through a PDCCH because the DCI is carried on the PDCCH. That the network device sends the downlink data to the terminal device may also be understood as that the network device sends the downlink data to the terminal device through a PDSCH because the downlink data is carried on the PDSCH. One PDCCH may be used to schedule one PDSCH or a plurality of repetitions (repetitions) of the PDSCH. It may be understood that the PDSCH corresponds to one time-frequency resource, and the network device may send data to the terminal device on the time-frequency resource corresponding to the PDSCH. Therefore, in this application, the PDSCH may be understood as the time-frequency resource corresponding to the PDSCH, or may be understood as data carried on the PDSCH. Similarly, a PDSCH repetition may also be understood as a time-frequency resource corresponding to the PDSCH repetition, or may be understood as data sent to the terminal device on the time-frequency resource corresponding to the PDSCH repetition.

The DCI indicates a time unit in which the PDSCH is located, and a start symbol S and a length L of the time unit in which the PDSCH is located. For example, the DCI includes a field used to indicate an offset value K0, the start symbol S, and the length L. K0 indicates a difference between a number of a time unit in which the DCI is received and a number of a time unit in which the PDSCH is received.

The terminal device may determine, through PDCCH blind detection, that there is a PDCCH sent to the terminal device in a specific time unit, and obtain, by parsing DCI carried on the PDCCH, information about a PDSCH scheduled by using the DCI. For example, a time unit in which the PDSCH is located is determined based on the time unit in which the PDCCH is located and the offset value K0 indicated in the DCI, and a time domain position occupied by the PDSCH in the transmission time unit of the PDSCH is determined based on the start symbol S and the length L that are indicated in the DCI, to receive downlink data from the network device at the time domain position.

The DCI indicates a row in a time domain resource allocation (time domain resource allocation, TDRA) table. The time domain resource allocation table may be a predefined table or a table configured by using higher layer signaling.

"Predefined" may be understood as "predefined in a standard or a protocol". The terminal device and the network device need to prestore the predefined time domain resource allocation table. After obtaining the DCI, the terminal device may determine a time domain resource of the PDSCH based on the time domain resource allocation table and the DCI.

In this application, the higher layer signaling may be signaling sent by a higher protocol layer. For example, the higher layer signaling may be a media access control (medium access control, MAC) control element (control element, CE), or may be radio resource control (radio resource control, RRC) signaling.

The time domain resource allocation table includes a plurality of rows, and each row includes an offset value K0, a start symbol S, and a length L. Optionally, the start symbol S and the length L may be jointly encoded as one parameter, namely, a start and length indicator value (start and length indicator value, SLIV), or two independent parameters. It should be understood that the SLIV indicates a time domain position (a time domain resource) at which the terminal device sends a PDSCH in a time unit, and the time domain resource may include at least one symbol. Herein, both the SLIV and the two independent parameters, namely, the start symbol S and the length L may be represented by (S, L). For example, Table 1 is a time domain resource allocation table according to an embodiment of this application.

**Table 1 Time domain resource allocation table**

| Index (index) | K0 | (S, L) |
|---|---|---|
| 0 | 1 | (2, 4) |
| 1 | 1 | (2, 2) |
| 2 | 2 | (3, 4) |
| 3 | 2 | (0, 7) |

It can be learned from Table 1 that the time domain resource allocation table includes the index, the offset value K0, the start symbol S, and the length L. Each index indicates one row in the time domain resource allocation table. For example, if the DCI includes a 2-bit (bit) indication field indicating an index 0, K0 is 1, the start symbol S is a symbol 2, and the length L is four symbols. For another example, if the DCI indicates an index 1, K0 is 1, the start symbol S is a symbol 2, and the length L is two symbols. For another example, if the DCI indicates an index 2, K0 is 2, the start symbol S is a symbol 3, and the length L is four symbols.

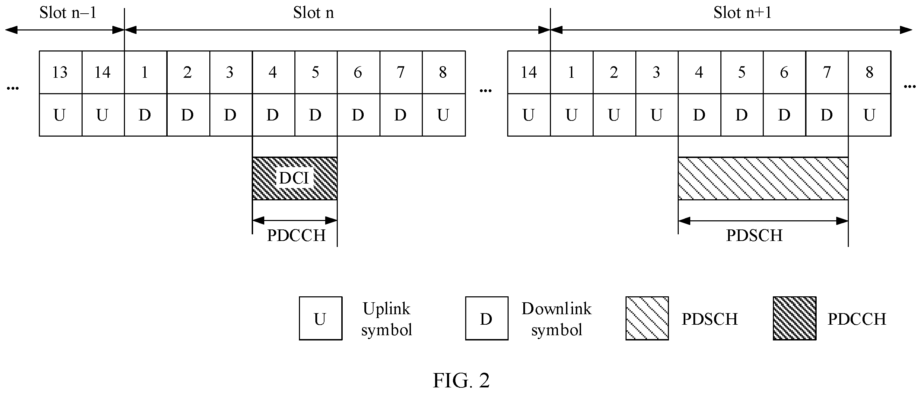

For example, as shown in FIG. 2, it is assumed that K0=1, the start symbol S is a symbol 4, and the length L is four symbols. If the terminal device receives the DCI in a slot n, because K0=1, the terminal device receives a PDSCH on the 4^{th} symbol to the 7^{th} symbol in a slot n+1. In FIG. 2, symbols in one slot are numbered from 1 to 14. It may be understood that symbols in one slot may alternatively be numbered from 0 to 13.

Usually, to reduce overheads of control instructions, the network device may send a PDSCH to the terminal device in a semi-persistent scheduling (semi-persistent scheduling, SPS) manner, and a corresponding PDSCH is also referred to as an SPS PDSCH. The dynamic scheduling manner may also be referred to as a non-semi-persistent scheduling manner.

It may be understood that execution bodies of embodiments of this application may be a terminal device and a network device, or a module used in the terminal device and a module used in the network device. The module herein may be a chip. The following uses the terminal device and the network device as the execution bodies for description.

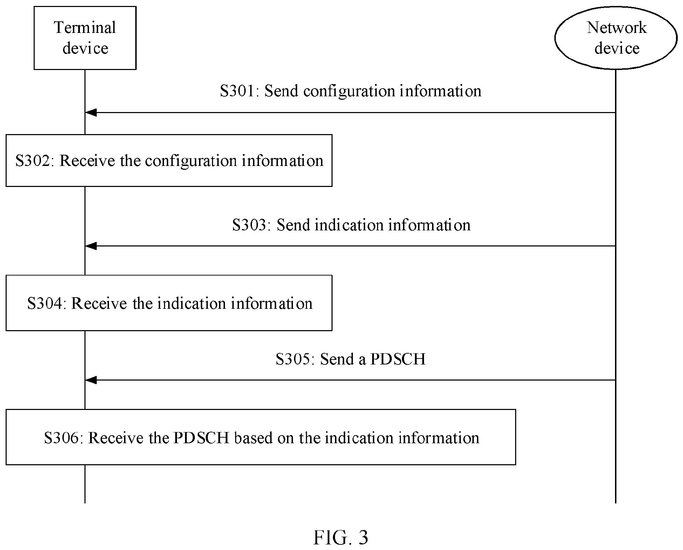

For example, FIG. 3 is a flowchart of sending a PDSCH in an SPS manner according to an embodiment of this application.

S301: A network device sends configuration information to a terminal device.

The configuration information indicates an SPS configuration to the terminal device. The SPS configuration includes an SPS index (index), an SPS period, and a repetition quantity K. The SPS index is used to identify the SPS configuration. The SPS index may also be referred to as an SPS identifier (identifier, ID). The SPS period is a quantity of time units between time units in which two adjacent PDSCHs in time domain are located, and a value of the SPS period may be an integer multiple of a quantity of slots. The repetition quantity indicates that a PDSCH is repeated for K times, and K is an integer greater than or equal to 1. Assuming that the network device sends one PDSCH in each time unit and repeats the PDSCH for K times, the network device sends one PDSCH in each of K time units, and sends K PDSCH repetitions in total. A length of the K time units is less than or equal to the SPS period. The PDSCH repetition means that each PDSCH in a plurality of PDSCH repetitions carries same data.

Optionally, the configuration information may be higher layer signaling.

S302: The terminal device receives the configuration information from the network device.

After receiving the configuration information, the terminal device determines information such as the SPS index, the SPS period, and the repetition quantity K.

S303: The network device sends indication information to the terminal device.

The indication information is used to activate the SPS configuration. The indication information may indicate the SPS index, and may further indicate a time unit in which a PDSCH corresponding to the SPS configuration is located, a time unit in which feedback information for the PDSCH corresponding to the SPS configuration is located, and a start symbol S and a length L of the time unit in which the PDSCH is located.

For example, the indication information may be DCI. The DCI includes K0, the SPS index, the start symbol S, and the length L. For explanations of K0, the start symbol S, and the length L, refer to the foregoing descriptions in the dynamic scheduling manner.

S304: The terminal device receives the indication information from the network device.

The indication information is used to activate the SPS configuration. After receiving the indication information, the terminal device determines, based on the indication information, a time-frequency resource for receiving the PDSCH.

S305: The network device sends the PDSCH to the terminal device.

S306: The terminal device receives the PDSCH from the network device based on the indication information.

The terminal device may determine, through PDCCH blind detection, that there is a PDCCH sent to the terminal device in a first time unit, and obtain, by parsing DCI carried on the PDCCH, information about the PDSCH scheduled by using the DCI. For example, the terminal device determines, based on the first time unit and K0 indicated in the DCI, a second time unit in which the PDSCH is located, determines, based on a start symbol S and a length L that are indicated in the DCI, a time domain position occupied by the PDSCH in the second time unit, to receive the PDSCH from the network device at the time domain position.

In addition, after the second time unit, the terminal device may determine, based on the SPS period, a time unit in which another PDSCH corresponding to the SPS configuration continues to be received, and determine, based on the start symbol S and the length L, a time domain position of the another PDSCH corresponding to the SPS configuration.

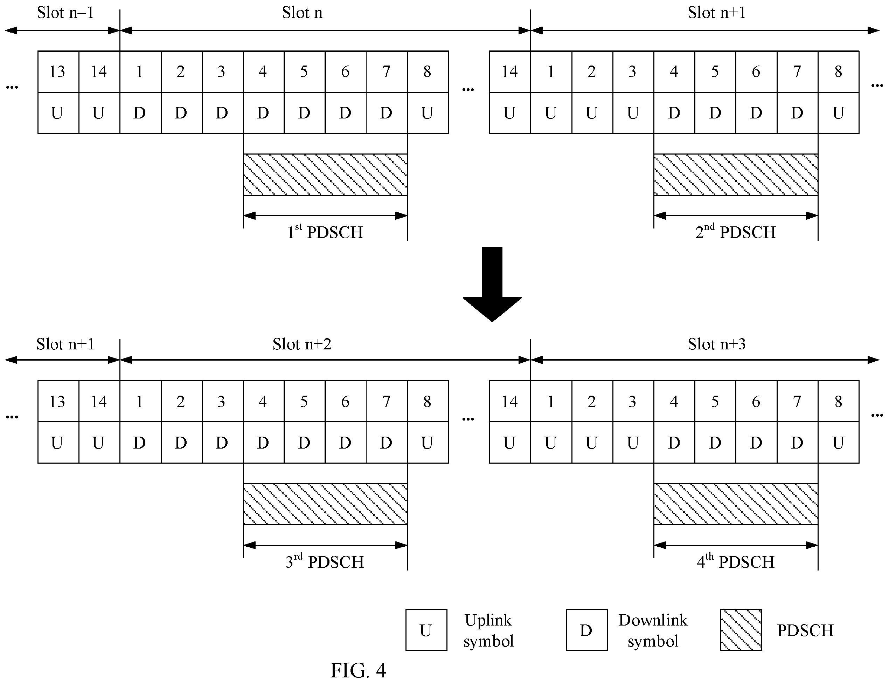

For example, as shown in FIG. 4, it is assumed that K0=0, the start symbol S is a symbol 4, and the length L is four symbols. If the terminal device receives the DCI in a slot n, because K0=0, the terminal device receives the 1^{st} PDSCH on the 4^{th} symbol to the 7^{th} symbol in the slot n. If the SPS period is one slot, the terminal device receives another PDSCH on the 4^{th} symbol to the 7^{th} symbol in each slot starting from the slot n. For example, the terminal device receives the 2^{nd} PDSCH on the 4^{th} symbol to the 7^{th} symbol in a slot n+1, the terminal device receives the 3^{rd} PDSCH on the 4^{th} symbol to the 7^{th} symbol in a slot n+2, and the terminal device receives the 4^{th} PDSCH on the 4^{th} symbol to the 7^{th} symbol in a slot n+3.

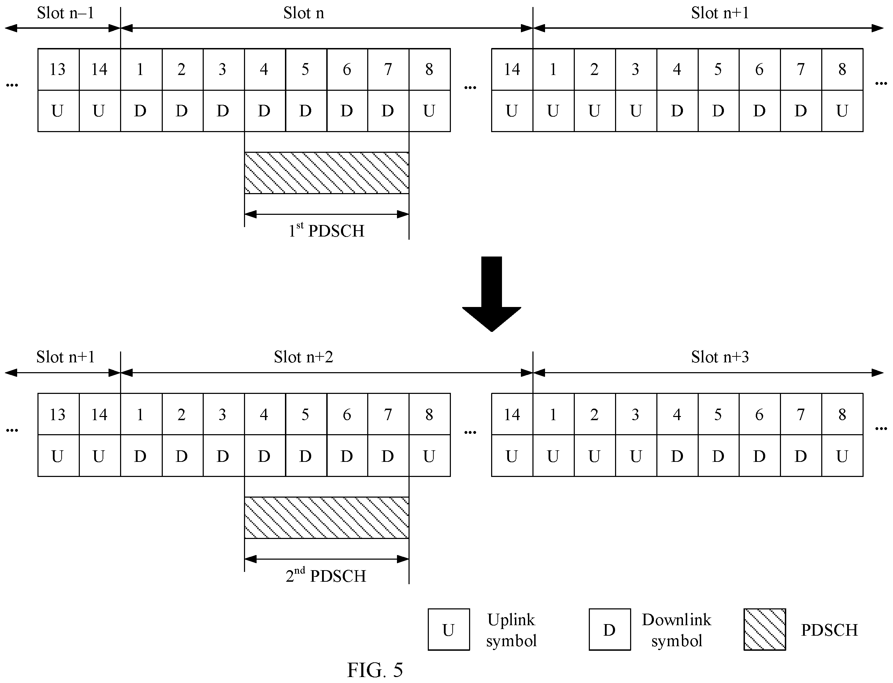

Optionally, as shown in FIG. 5, if the SPS period is two slots, the terminal device receives, at an interval of one slot starting from a slot n, on the 4^{th} symbol to the 7^{th} symbol of a corresponding slot, a PDSCH on which specific data is transmitted. For example, the terminal device receives the 1^{st} PDSCH on the 4^{th} symbol to the 7^{th} symbol in the slot n. The terminal device receives the 2^{nd} PDSCH on the 4^{th} symbol to the 7^{th} symbol in a slot n+2. Optionally, if the repetition quantity K is 2, as shown in FIG. 4, the terminal device receives a PDSCH on the 4^{th} symbol to the 7^{th} symbol in each slot starting from the slot n, where PDSCHs in every two adjacent slots starting from the slot n are two repetitions of a same piece of data.

In this specification, for a semi-persistent scheduling manner, the 1^{st} PDSCH may be referred to as a PDSCH that has scheduling information, because the 1^{st} PDSCH has a corresponding PDCCH used to activate the PDSCH, and all subsequent PDSCHs are PDSCHs that have no scheduling information. Optionally, a PDSCH that has scheduling information may also be referred to as a dynamically scheduled PDSCH. A PDSCH that has no scheduling information may also be referred to as a PDSCH that has no corresponding PDCCH. In this specification, a PDSCH that has no scheduling information is denoted as an SPS PDSCH. It may be understood that the dynamically scheduled PDSCH may be a PDSCH sent in the dynamic scheduling manner or the 1^{st} PDSCH sent in the semi-persistent scheduling manner.

Further, after receiving the downlink data, the terminal device sends feedback information to the network device, to indicate whether the terminal device correctly receives the PDSCH. A PDSCH to hybrid automatic repeat request (hybrid automatic repeat request, HARQ) feedback timing (PDSCH to HARQ feedback timing) field indicates a time unit in which the feedback information corresponding to the PDSCH is located.

The DCI for scheduling the PDSCH may indicate one value of K1 in a K1 set by using the PDSCH to HARQ timing field. The K1 set may be a set configured by using higher layer signaling. K1 indicates a difference between a number of a time unit in which the PDSCH is transmitted and a number of a time unit in which the feedback information for the PDSCH is sent. Assuming that the terminal device receives the PDSCH in a (n+1)^{th} time unit, the terminal device sends, to the network device in a (n+1+K1)^{th} time unit, the feedback information corresponding to the PDSCH. The feedback information may be an acknowledgement (acknowledgement, ACK), or may be a negative acknowledgement (negative acknowledgement, NACK). That the terminal device sends the feedback information to the network device may also be understood as that the terminal device sends the feedback information to the network device through a PUCCH because the feedback information is carried on the PUCCH. The PUCCH is a channel that carries uplink control information (uplink control information, UCI), and the UCI mainly includes the feedback information (the ACK/NACK) corresponding to the PDSCH.

Optionally, if the repetition quantity K is configured for the SPS configuration activated by the network device, the terminal device sends, to the network device in a time unit whose number is a number of a time unit in which the last repetition in the PDSCH repetitions is received plus K1, the feedback information corresponding to the PDSCH. Although the PDSCH is repeated for N times, the terminal device sends only one piece of feedback information. Specifically, the one piece of feedback information may be 1 bit or a plurality of bits.

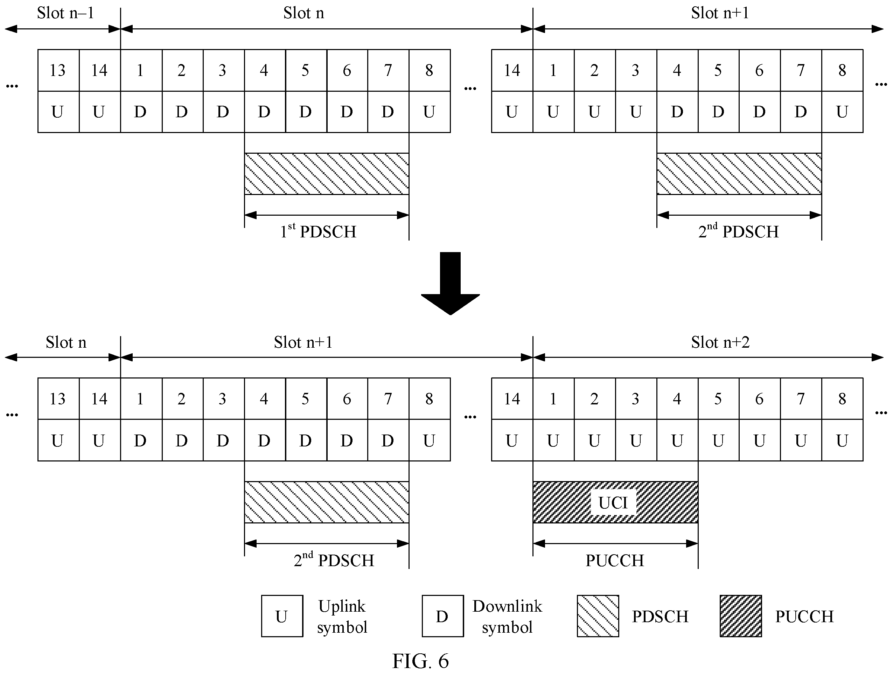

For example, as shown in FIG. 6, it is assumed that K1=1, the terminal device receives the last repetition in the PDSCH repetitions in a slot n+1, and the terminal device sends the feedback information corresponding to the PDSCH to the network device in a slot n+2. For another example, if K1=4, the terminal device feeds back the feedback information for the PDSCH in a slot n+5.

In an NR system, the network device may configure a plurality of SPS configurations for the terminal device. A specific value of a parameter included in each SPS configuration may be different. Different SPS indexes indicate different SPS configurations. SPS periods of different SPS configurations may be the same or may be different. Repetition quantities K of different SPS configurations may be the same or may be different. Optionally, the network device may configure a plurality of SPS configurations by using different configuration information according to the method in step S301, or may configure a plurality of SPS configurations by using one piece of configuration information.

The network device may indicate, by using different indication information according to the method in step S304, the terminal device to activate the plurality of SPS configurations. For example, the plurality of SPS configurations are activated by using different DCI. The DCI may be referred to as activation DCI of the SPS configuration, and a PDCCH carrying the DCI is referred to as an activation PDCCH of the SPS configuration.

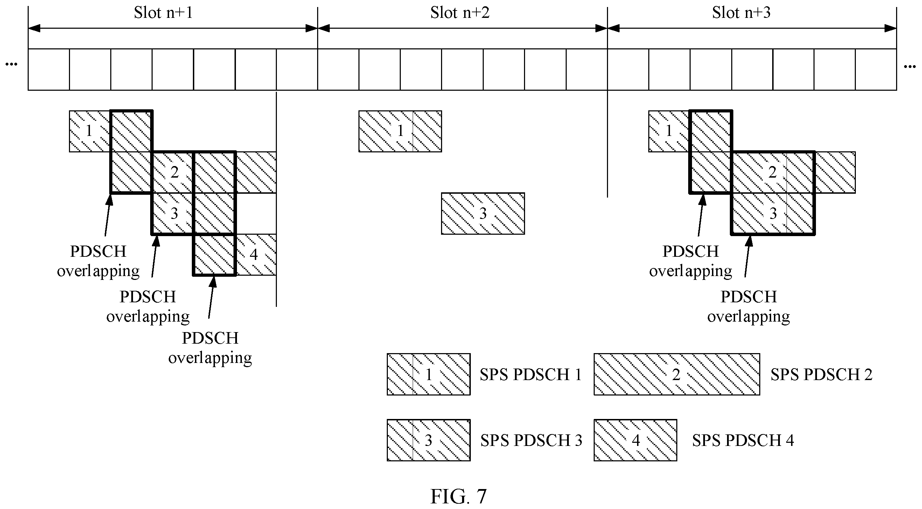

For example, it is assumed that the network device sends four pieces of indication information to the terminal device, each piece of indication information indicates to activate one SPS configuration, and the four pieces of indication information indicate to activate four SPS configurations. Herein, it is assumed that the four SPS configurations are an SPS 1, an SPS 2, an SPS 3, and an SPS 4. Both a period of the SPS 1 and a period of the SPS 3 are one slot, a period of the SPS 2 is two slots, and a period of the SPS 4 is four slots. FIG. 7 is a schematic diagram of a time domain position of an SPS configuration according to an embodiment of this application. It can be learned that PDSCHs corresponding to the plurality of SPS configurations may overlap in a slot. For ease of understanding, a plurality of examples are used for the PDSCHs corresponding to the plurality of SPS configurations.

For example, in a slot n+1, a PDSCH corresponding to the SPS 1 overlaps a PDSCH corresponding to the SPS 2, the PDSCH corresponding to the SPS 2 overlaps a PDSCH corresponding to the SPS 3, the PDSCH corresponding to the SPS 3 overlaps a PDSCH corresponding to the SPS 4, and the PDSCH corresponding to the SPS 4 overlaps the PDSCH corresponding to the SPS 2.

For another example, in a slot n+3, the PDSCH corresponding to the SPS 1 overlaps the PDSCH corresponding to the SPS 2, and the PDSCH corresponding to the SPS 2 overlaps the PDSCH corresponding to the SPS 3.

In the following, for ease of description, an SPS PDSCH 1 is used to represent the PDSCH corresponding to the SPS 1; an SPS PDSCH 2 is used to represent the PDSCH corresponding to the SPS 2; an SPS PDSCH 3 is used to represent the PDSCH corresponding to the SPS 3; and an SPS PDSCH 4 is used to represent the PDSCH corresponding to the SPS 4.

However, because a capability of the terminal device is limited, when PDSCHs corresponding to a plurality of SPS configurations overlap in a time unit, the terminal device can receive only one or more PDSCHs. The plurality of PDSCHs may be determined based on a quantity, reported by the terminal device, of PDSCHs that can be simultaneously received or a quantity, reported by the terminal device, of data that can be simultaneously received.

When the PDSCHs corresponding to the plurality of SPS configurations overlap in the time unit, the terminal device may receive a PDSCH corresponding to an SPS configuration with a smallest SPS index. For example, when the PDSCH corresponding to the SPS 1 overlaps the PDSCH corresponding to the SPS 2, the terminal device receives the PDSCH corresponding to the SPS 1. There may be the following two possible implementations in which the terminal device receives, from the PDSCHs corresponding to the plurality of SPS configurations in the time unit, the PDSCH corresponding to the SPS configuration with the smallest SPS index.

In a first possible implementation, in a time unit, the terminal device first defines that a group of SPS PDSCHs overlap, and then receives, in the group, a PDSCH corresponding to the SPS configuration with the smallest SPS index. A resource of each SPS PDSCH in the group of SPS PDSCHs meets the following condition:
1. A start symbol of the resource of the SPS PDSCH is not earlier than a start symbol of an earliest SPS PDSCH in the group, and an end symbol of the resource of the SPS PDSCH is not later than an end symbol of a latest SPS PDSCH.
2. The SPS PDSCH overlaps at least one SPS PDSCH in the group in time domain.
3. Both a start symbol and an end symbol of an SPS PDSCH other than the 1^{st} SPS PDSCH and the last SPS PDSCH overlap at least one SPS PDSCH in the group.

For example, as shown in FIG. 7, in the slot n+1, the SPS PDSCH 1 to the SPS PDSCH 4 are in one group, and the terminal device receives only the SPS PDSCH 1. In the slot n+3, the SPS PDSCH 1 and the SPS PDSCH 3 are in one group, and the terminal device receives only the SPS PDSCH 1.

In a second possible implementation, in a time unit, the terminal device first receives a PDSCH corresponding to the SPS configuration with the smallest SPS index, where the SPS PDSCH may be referred to as a target SPS PDSCH; and then removes all SPS PDSCHs that overlap the target SPS PDSCH in the time unit, and skips receiving the SPS PDSCH that overlaps the target SPS PDSCH in the time unit. The foregoing steps are repeated until there is no active SPS PDSCH in the time unit, or until a quantity of received data or a quantity of received PDSCHs reaches a capability of the terminal device, and receiving an SPS PDSCH is stopped.

For example, as shown in FIG. 7, in the slot n+1, the terminal device receives the SPS PDSCH 1, removes and skips receiving the SPS PDSCH 2, receives the SPS PDSCH 3, and removes and skips receiving the SPS PDSCH 4. In the slot n+3, the terminal device receives the SPS PDSCH 1, removes and skips receiving the SPS PDSCH 2, and receives the SPS PDSCH 3.

When the PDSCHs corresponding to the plurality of SPS configurations overlap in the time unit, if the terminal device does not receive a specific SPS PDSCH, the terminal device does not send feedback information corresponding to the SPS PDSCH to the network device, thereby reducing uplink signaling overheads.

For example, when the SPS PDSCH is repeated in a slot n-N+1 to a slot n, the terminal device sends the feedback information to the network device only in a slot n+K1. If the terminal device does not receive a last SPS PDSCH in repeatedly transmitted SPS PDSCHs, that is, an SPS PDSCH in the slot n, the terminal device does not send, to the network device, feedback information corresponding to the SPS PDSCH. Consequently, resources of a plurality of SPS PDSCHs that are previously transmitted are wasted.

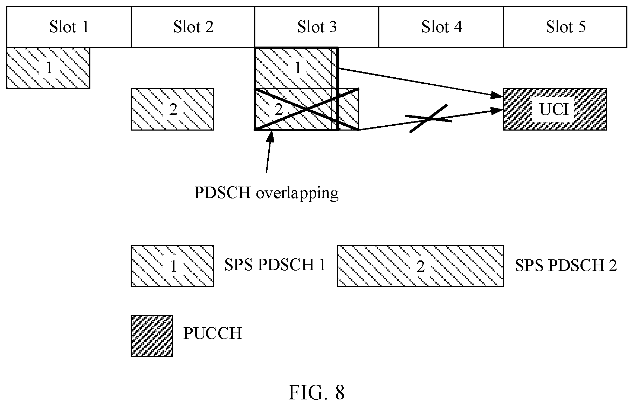

For example, as shown in FIG. 8, it is assumed that a period of the SPS 1 is two slots, a repetition quantity K is 1, and one SPS PDSCH 1 is sent in each of a slot 1 and a slot 3; and a period of the SPS 2 is two slots, a repetition quantity K is 2, and one SPS PDSCH 2 is sent in each of a slot 2 and the slot 3.

In the slot 3, because the SPS PDSCH 1 overlaps the SPS PDSCH 2, according to the foregoing first or second possible implementation, the terminal device receives the PDSCH corresponding to the SPS configuration with the smallest SPS index, namely, the SPS PDSCH 1, and the terminal device does not receive the SPS PDSCH 2. In this case, the terminal device does not send feedback information corresponding to the SPS PDSCH 2 to the network device. However, the terminal device has received one SPS PDSCH 2 in the slot 2. Because the SPS PDSCHs carry same data and are two repetitions in PDSCH repetitions of the same data, the SPS PDSCH 2 in the slot 2 may be correctly decoded. If the terminal device does not send the feedback information corresponding to the SPS PDSCH 2 to the network device, the network device needs to continue retransmission. The SPS PDSCH 2 received by the terminal device in the slot 2 is equivalently wasted, and data transmission efficiency is reduced. In the accompanying drawings of this application, black solid lines in the figures indicate no receiving or no sending.

An embodiment of this application provides a downlink data sending and receiving method. The method includes: When determining that at least two of P PDSCHs in a first time unit overlap in time domain, a network device selects M PDSCHs that do not overlap in time domain from the P PDSCHs; sends data to a terminal device only on the M PDSCHs; and receives feedback information corresponding to the M PDSCHs from the terminal device. Similarly, when determining that at least two of P PDSCHs in a first time unit overlap in time domain, a terminal device selects M PDSCHs that do not overlap in time domain from the P PDSCHs; receives data from a network device only on the M PDSCHs; and sends feedback information corresponding to the M PDSCHs to the network device. The P PDSCHs include a PDSCH that has no corresponding PDCCH, and P is an integer greater than 1. M is equal to 1, or M is an integer greater than 1 and less than P.

In addition, a first PDSCH is a PDSCH other than the M PDSCHs in the P PDSCHs. It may be understood that if the first PDSCH overlaps at least one of the M PDSCHs, the network device does not send data to the terminal device on the first PDSCH. Similarly, the terminal device does not receive data from the network device on the first PDSCH.

If the first PDSCH is the last repetition in PDSCH repetitions of first data, the method further includes: When sending the first data to the terminal device on a second PDSCH, the network device receives feedback information for the first data from the terminal device in a feedback time unit corresponding to the first PDSCH. Similarly, when receiving the first data from the network device on a second PDSCH, the terminal device sends feedback information for the first data to the network device in a feedback time unit corresponding to the first PDSCH. The second PDSCH is any repetition of the first data before the first PDSCH, and a time domain position of the first PDSCH is after a time domain position of the second PDSCH.

According to the downlink data sending and receiving method provided in this application, when at least two of P PDSCHs in one slot overlap in time domain, the network device cancels sending of partially overlapping PDSCHs. If one first PDSCH whose sending is canceled is the last repetition in the PDSCH repetitions of the first data, and the terminal device receives another repetition in the PDSCH repetitions of the first data before the first PDSCH, the terminal device still sends the feedback information for the first data to the network device. In this way, a retransmission probability of the first data is reduced, and data transmission efficiency is improved.

The following describes the implementations of embodiments of this application in detail with reference to the accompanying drawings.

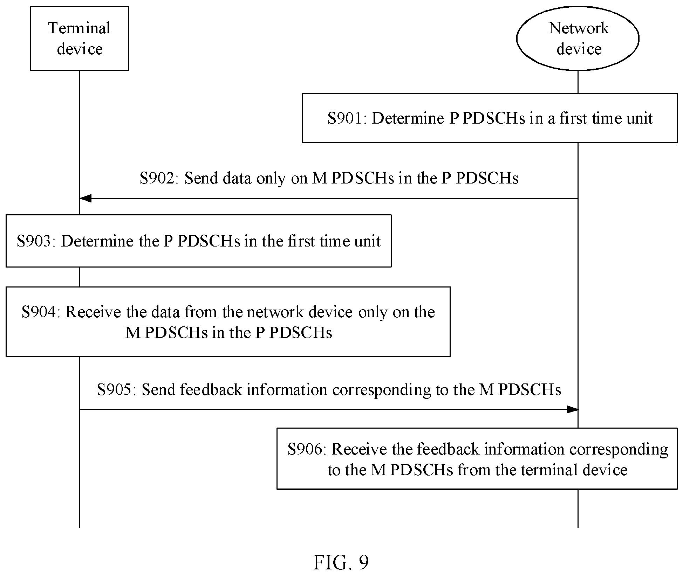

FIG. 9 is a flowchart of a downlink data sending and receiving method according to an embodiment of this application. As shown in FIG. 9, the method may include the following steps.

S901: A network device determines P PDSCHs in a first time unit.

Before sending the PDSCH to a terminal device, the network device first determines a transmission manner for sending the PDSCH, for example, a dynamic scheduling manner or a semi-persistent scheduling manner. Therefore, the network device may determine, based on a transmission manner of a plurality of PDSCHs, a quantity of PDSCHs to be transmitted in one time unit. In this embodiment of this application, it is assumed that the network device determines the P PDSCHs in the first time unit. The P PDSCHs include a PDSCH that has no corresponding PDCCH, at least two of the P PDSCHs overlap in time domain, and P is an integer greater than 1.

S902: The network device sends data to the terminal device only on M PDSCHs in the P PDSCHs.

During initial establishment, the terminal device reports a capability of the terminal device to the network device. Therefore, the network device may determine, based on the capability of the terminal device, a quantity of PDSCHs that can be received by the terminal device in one time unit. To avoid a waste of time-frequency resources, the network device may send a PDSCH to the terminal device based on the quantity of PDSCHs that can be received by the terminal device in one time unit.

Specifically, the network device may select, from the P PDSCHs, the M PDSCHs that do not overlap in time domain, and send the data to the terminal device only on the M PDSCHs. M is equal to 1, or M is an integer greater than 1 and less than P. The terminal device may select the M PDSCHs from the P PDSCHs in a manner the same as that used by the network device. Details are described below.

S903: The terminal device determines the P PDSCHs in the first time unit.

Before receiving the PDSCH, the terminal device may determine, based on indication information (for example, DCI) from the network device, a time domain position at which the PDSCH is located. For example, the indication information indicates a time unit in which the PDSCH is located, and a start symbol S and a length L of the time unit in which the PDSCH is located. For detailed explanations of the indication information, refer to the foregoing descriptions. In this embodiment of this application, it is assumed that the terminal device determines the P PDSCHs in the first time unit. The P PDSCHs include a PDSCH that has no corresponding PDCCH, at least two of the P PDSCHs overlap in time domain, and P is an integer greater than 1.

S904: The terminal device receives the data from the network device only on the M PDSCHs in the P PDSCHs.

After determining time domain positions at which the P PDSCHs are located, the terminal device may determine, based on the capability of the terminal device, the quantity of PDSCHs that can be received in one time unit, to receive the PDSCH, or receive only one PDSCH in one time unit.

The terminal device selects, from the P PDSCHs, the M PDSCHs that do not overlap in time domain, and receives the data from the network device only on the M PDSCHs. M is equal to 1, to be specific, only one PDSCH is received in one time unit; or M is an integer greater than 1 and less than P, to be specific, a plurality of PDSCHs are received in one time unit. The terminal device may select the M PDSCHs from the P PDSCHs according to the foregoing first possible implementation or second possible implementation. For detailed explanations, refer to the foregoing descriptions. Optionally, the terminal device may alternatively select the M PDSCHs in another manner. For example, the terminal device may select, from the P PDSCHs in the following third possible implementation, the M PDSCHs that do not overlap in time domain.

In this application, receiving a PDSCH may be referred to as receiving data on the PDSCH, or may be referred to as receiving, on the PDSCH, data, and may specifically include one or more of the following steps: performing demodulation, reverse rate matching, and HARQ combination and decoding on a signal on the PDSCH. According to a predefined rule, when the terminal device considers that the network device does not send a specific PDSCH, the terminal device does not receive the PDSCH. That the terminal device receives no PDSCH or does not receive the PDSCH herein may be understood as that the terminal device does not process, based on a related transmission configuration of the PDSCH, data that may be carried on the PDSCH. Related transmission parameters of the PDSCH may include a time-frequency resource, a modulation scheme, a HARQ process number, and the like. That the terminal device does not process data that may be carried on the PDSCH specifically includes that the terminal device does not perform demodulation, reverse rate matching, HARQ combination, or decoding on information on the PDSCH.

S905: The terminal device sends feedback information corresponding to the M PDSCHs to the network device.

After receiving the data from the network device on the M PDSCHs in time domain, the terminal device sends the feedback information corresponding to the M PDSCHs to the network device. For example, the terminal device sends the feedback information corresponding to the M PDSCHs to the network device in feedback time units corresponding to the M PDSCHs. The feedback time units corresponding to the M PDSCHs may be determined based on an offset value K1 corresponding to each of the M PDSCHs. For detailed explanations, refer to the foregoing descriptions. Details are not described again. A feedback time unit corresponding to each of the M PDSCHs may be the same or may be different. This is not limited.

S906: The network device receives the feedback information corresponding to the M PDSCHs from the terminal device.

The network device receives the feedback information corresponding to the M PDSCHs from the terminal device in the feedback time units corresponding to the M PDSCHs.

It should be noted that, because each of P-M PDSCHs in the P PDSCHs overlaps at least one of the M PDSCHs, the terminal device does not receive data from the network device on the P-M PDSCHs. The P-M PDSCHs are PDSCHs other than the M PDSCHs in the P PDSCHs.

For example, a first PDSCH is a PDSCH other than the M PDSCHs in the P PDSCHs. It may be understood that if the first PDSCH overlaps at least one of the M PDSCHs, the terminal device does not receive data from the network device on the first PDSCH.

Further, if the first PDSCH is the last repetition in PDSCH repetitions of first data, the method further includes the following steps.

Step 1: When the terminal device receives the first data from the network device on a second PDSCH, terminal device may send feedback information corresponding to the first data to the network device in a feedback time unit that corresponds to the first PDSCH and that is after the second PDSCH.

The second PDSCH is any repetition of the first data before the first PDSCH, and a time domain position of the second PDSCH is before a time domain position of the first PDSCH. It may be understood that the PDSCH repetitions of the first data include a plurality of repeated transmissions of the first data that are performed through a plurality of PDSCHs, and a redundancy version used in each repeated transmission may be the same or may be different.

The feedback time unit may be determined by the terminal device based on the first time unit in which the first PDSCH is located and K1.

Step 2: When the network device sends the first data to the terminal device on the second PDSCH, the network device receives the feedback information corresponding to the first data from the terminal device in the feedback time unit that corresponds to the first PDSCH and that is after the second PDSCH.

For the plurality of repeated transmissions of the first data, although the last repeated transmission is discarded, provided that the terminal device receives one repetition in the plurality of repeated transmissions of the first data, the terminal device can send the feedback information for the first data to the network device in the corresponding feedback time unit, to indicate to the network device whether the first data is correctly received by the terminal device. The feedback time unit may be determined by the network device and the terminal device based on the first time unit in which the first PDSCH is located and K1. K1 may be determined based on indication information on an active PDCCH. Because the terminal device sends the feedback information for the first data to the network device, a retransmission probability of the first data is reduced, and transmission efficiency is improved.

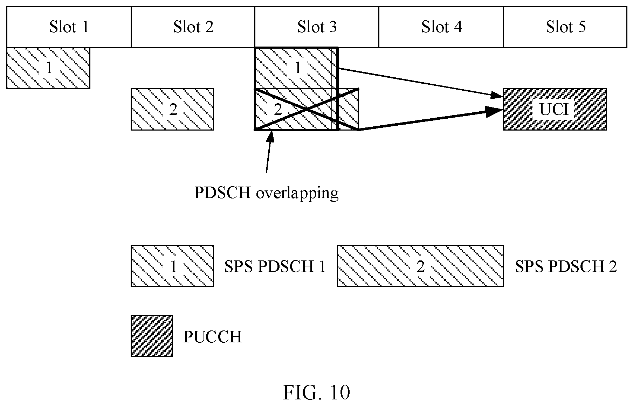

For example, as shown in FIG. 10, in a slot 3, because an SPS PDSCH 1 overlaps an SPS PDSCH 2, the terminal device receives a PDSCH corresponding to an SPS configuration with a smaller SPS index, namely, the SPS PDSCH 1, and the terminal device does not receive the SPS PDSCH 2. In a slot 2, the terminal device receives one SPS PDSCH 2, and the SPS PDSCH 2 is correctly decoded. A difference from FIG. 8 lies in that although the terminal device does not receive the last transmitted SPS PDSCH 2, the terminal device still sends, to the network device, the feedback information corresponding to the first data carried on the SPS PDSCH 2, so that a retransmission probability of the first data carried on the SPS PDSCH 2 is reduced, and transmission efficiency is improved.

A sequence of the steps of the downlink data sending and receiving method provided in this embodiment of this application may be properly adjusted according to a logical relationship thereof. For example, a sequence between S902 and S903 may be changed. To be specific, the terminal device first determines the P PDSCHs in the first time unit, and then the network device sends the data to the terminal device on the M PDSCHs in the P PDSCHs.

In another possible design, when the network device sends second data to the terminal device on a fourth PDSCH, the network device sends the second data to the terminal device on a third PDSCH. It should be understood that, the M PDSCHs include the third PDSCH. The third PDSCH and the fourth PDSCH each are one repetition in PDSCH repetitions of the second data, and a time domain position of the third PDSCH is after a time domain position of the fourth PDSCH. For the terminal device, when the terminal device receives the second data from the network device on the fourth PDSCH, the terminal device receives the second data from the network device on the third PDSCH. In other words, for a plurality of repeated PDSCH transmissions of the second data, if the network device sends one of the repeated PDSCH transmissions, a priority of a subsequent repeated transmission of the second data is higher than a priority of another PDSCH, to ensure reliable transmission of the second data. Usually, repeated transmission is performed to improve data transmission reliability. A priority of a repeatedly transmitted PDSCH is preferentially ensured, so that reliable transmission of data using a repeated transmission mechanism can be ensured.

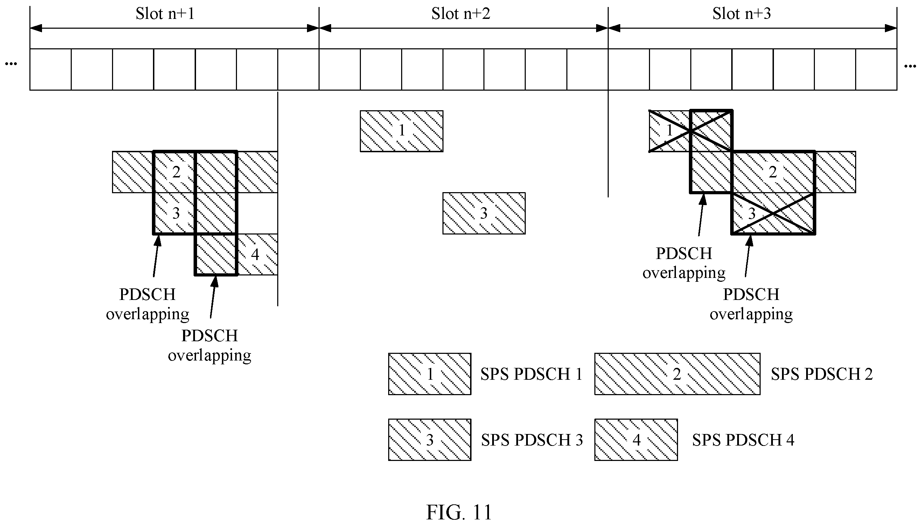

For example, as shown in FIG. 11, in a slot n+1, an SPS PDSCH 2, an SPS PDSCH 3, and an SPS PDSCH 4 overlap in time domain. However, because an SPS index value of the SPS PDSCH 2 is the smallest, the network device sends the SPS PDSCH 2 to the terminal device, where the SPS PDSCH 2 is one of PDSCH repetitions of the second data. In a slot n+3, an SPS PDSCH 1, the SPS PDSCH 2, and the SPS PDSCH 3 overlap in time domain. Although an SPS index value of the SPS PDSCH 1 is the smallest, because one SPS PDSCH 2 has been transmitted in the slot n+1, a priority of the SPS PDSCH 2 is higher than that of the SPS PDSCH 1, and the network device chooses to send the SPS PDSCH 2 instead of sending the SPS PDSCH 1. Correspondingly, the terminal device receives the SPS PDSCH 2 but does not receive the SPS PDSCH 1 or the SPS PDSCH 3 in the slot n+3.

In another possible design, if the network device does not send the 1^{st} repeated PDSCH in PDSCH repetitions, the network device does not send any repeated PDSCH after the 1^{st} repeated PDSCH. Correspondingly, on a premise that the terminal device does not receive the 1^{st} repeated PDSCH in the PDSCH repetitions, the terminal device does not receive any repeated PDSCH after the 1^{st} repeated PDSCH. For example, it is assumed that a fifth PDSCH is the 1^{st} repetition in the PDSCH repetitions, the first PDSCH is one repetition after the 1^{st} repetition in the PDSCH repetitions, and the time domain position of the first PDSCH is after a time domain position of the fifth PDSCH. When the network device does not send the fifth PDSCH to the terminal device, the network device does not send the first PDSCH to the terminal device. Correspondingly, when the terminal device does not receive the fifth PDSCH from the network device, the terminal device does not receive the first PDSCH.

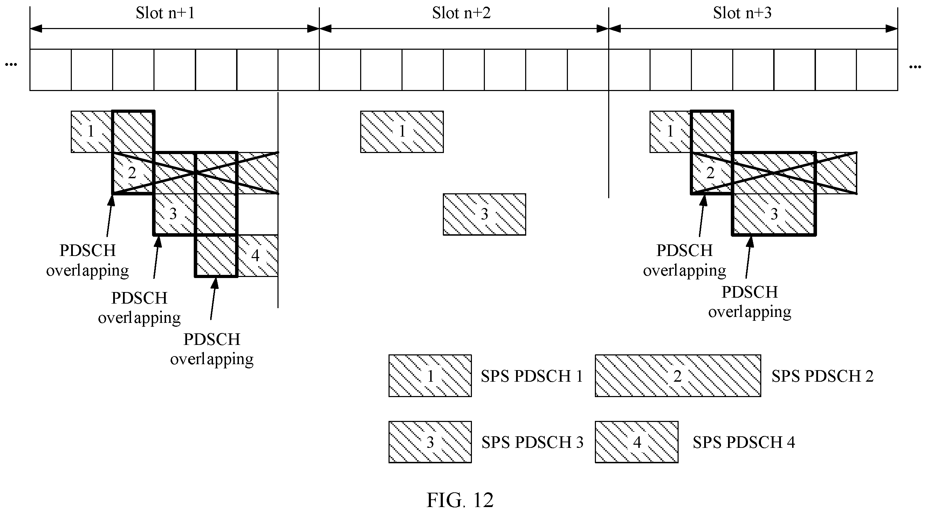

For example, as shown in FIG. 12, in a slot n+1, it is assumed that an SPS PDSCH 2 is the 1^{st} repetition in PDSCH repetitions of third data. Because the SPS PDSCH 2 separately overlaps an SPS PDSCH 1, an SPS PDSCH 3, and an SPS PDSCH 4 in time domain, the network device does not send the third data to the terminal device on the SPS PDSCH 2, and correspondingly, the terminal device does not receive the third data from the network device on the SPS PDSCH 2. In a slot n+3, the SPS PDSCH 2 is the 2^{nd} repetition in the PDSCH repetitions of the third data, and the SPS PDSCH 2 overlaps the SPS PDSCH 1 and the SPS PDSCH 3 in time domain. Therefore, the network device does not send the third data to the terminal device on the SPS PDSCH 2, and correspondingly, the terminal device does not receive the third data from the network device on the SPS PDSCH 2.

If the network device does not send the 1^{st} repetition of the third data to the terminal device on the fifth PDSCH, the network device does not send the repetition of the third data to the terminal device on the first PDSCH. Because data carried on the 1^{st} repeated PDSCH may be self-decoded, if the 1^{st} repetition is not sent, data carried on a subsequently repeated PDSCH may not be correctly decoded after being received. Therefore, sending of the 1^{st} repeated PDSCH is canceled, and a plurality of subsequent repeated PDSCHs are also canceled, thereby saving resources and improving transmission efficiency.

When the network device activates a plurality of SPS configurations, how the terminal device defines PDSCH overlapping in a time unit is unclear. For example, as shown in FIG. 7, in the slot n+1, the SPS PDSCH 1 overlaps the SPS PDSCH 2 in time domain, but the SPS PDSCH 1 does not overlap the SPS PDSCH 3 in time domain, and the SPS PDSCH 1 does not overlap the SPS PDSCH 4 in time domain. If the terminal device selects the M PDSCHs from the P PDSCHs according to the foregoing first possible implementation or second possible implementation, a waste of resources is easily caused. For example, for four PDSCHs, if the terminal device receives a PDSCH corresponding to an SPS configuration with a smallest SPS index, and does not receive a PDSCH that does not overlap the PDSCH corresponding to the SPS configuration with the smallest SPS index, a waste of resources is caused. To improve resource utilization, this embodiment of this application provides the following possible selection manners of selecting the M PDSCHs that do not overlap in time domain from the P PDSCHs that overlap each other. An execution body of the selection process may be the terminal device or the network device. The following uses the terminal device as the body for description.

In the third possible implementation, each of the P PDSCHs is a PDSCH that has no corresponding PDCCH. A manner in which the terminal device selects the M PDSCHs from the P PDSCHs is as follows: The terminal device groups the P PDSCHs into a plurality of PDSCH groups, and selects a PDSCH with a smallest identifier in each PDSCH group. PDSCHs included in each PDSCH group overlap each other. In this application, the identifier of the PDSCH may be an identifier of an SPS configuration.

Further, PDSCHs with smallest identifiers in all PDSCH groups may also overlap. In this case, the terminal device may continue to select a PDSCH according to the third possible implementation, until the M PDSCHs that do not overlap each other in time domain are selected.

It is assumed that the terminal device selects N PDSCHs. If the N PDSCHs do not overlap each other, the terminal device does not need to perform selection, and N is equal to M.

If two of the N PDSCHs overlap in time domain, it indicates that an overlapping PDSCH exists in the PDSCHs selected by the terminal device. In this case, N is greater than M, and the terminal device continues to select a PDSCH by using the foregoing third possible implementation.

The foregoing process may also be understood as follows: The M PDSCHs are M PDSCHs in the N PDSCHs, each of the N PDSCHs belongs to one of N PDSCH groups, each PDSCH in the N PDSCH groups is one of the P PDSCHs, each of the P PDSCHs belongs to one of the N PDSCH groups, and N is an integer greater than or equal to M and less than or equal to P. PDSCHs in an i^{th} PDSCH group in the N PDSCH groups overlap each other. An i^{th} PDSCH in the N PDSCHs is a PDSCH with a smallest identifier value in the i^{th} PDSCH group, and i is a positive integer less than or equal to N.

Optionally, if N is greater than M, the terminal device selects Q PDSCHs from the N PDSCHs according to the third possible implementation. If the Q PDSCHs selected by the terminal device do not overlap each other, the terminal device does not need to perform selection again. If at least two of the Q PDSCHs selected by the terminal device overlap each other, Q is greater than M, indicating that an overlapping PDSCH exists in the PDSCHs selected by the terminal device. The terminal device continues to select a PDSCH according to the third possible implementation, until PDSCHs selected by the terminal device do not overlap each other. These non-overlapping PDSCHs are the M selected PDSCHs.

The foregoing process may also be understood as follows: The M PDSCHs are M PDSCHs in Q PDSCHs, each of the Q PDSCHs belongs to one of Q PDSCH groups, each PDSCH in the Q PDSCH groups is one of the N PDSCHs, each of the N PDSCHs belongs to one of the Q PDSCH groups, and Q is an integer greater than or equal to M and less than N. PDSCHs in a j^{th} PDSCH group in the Q PDSCH groups overlap each other. A j^{th} PDSCH in the Q PDSCHs is a PDSCH with a smallest identifier value in the j^{th} PDSCH group, and j is a positive integer less than or equal to Q.

In some other embodiments, the N PDSCH groups may be determined based on end symbols of a part of the P PDSCHs.

Details are as follows: Step 1: The terminal device denotes the P PDSCHs as a PDSCH set, where k is a positive integer less than or equal to N, and an initial value of k is equal to 1.

Step 2: The terminal device denotes a sixth PDSCH and a PDSCH that is in the PDSCH set and that overlaps the sixth PDSCH as a k^{th} PDSCH group in the N PDSCH groups, where an index value of an end symbol of the sixth PDSCH is the smallest in index values of end symbols of PDSCHs in the PDSCH set.

Step 3: The terminal device denotes a PDSCH other than the k^{th} PDSCH group in the PDSCH set as a PDSCH set, sets k+1=k, and repeats step 2 until the PDSCH set is empty.

Compared with the first possible implementation and the second possible implementation in which the terminal device determines, through one-by-one comparison, whether there is an overlapping PDSCH, and selects a non-overlapping PDSCH, and consequently, calculation complexity of the terminal device is high, and power consumption is high, in the foregoing third possible implementation, when a plurality of SPS PDSCHs overlap, an SPS PDSCH with a smallest group selection identifier is received, thereby reducing processing complexity and power consumption of the terminal device.

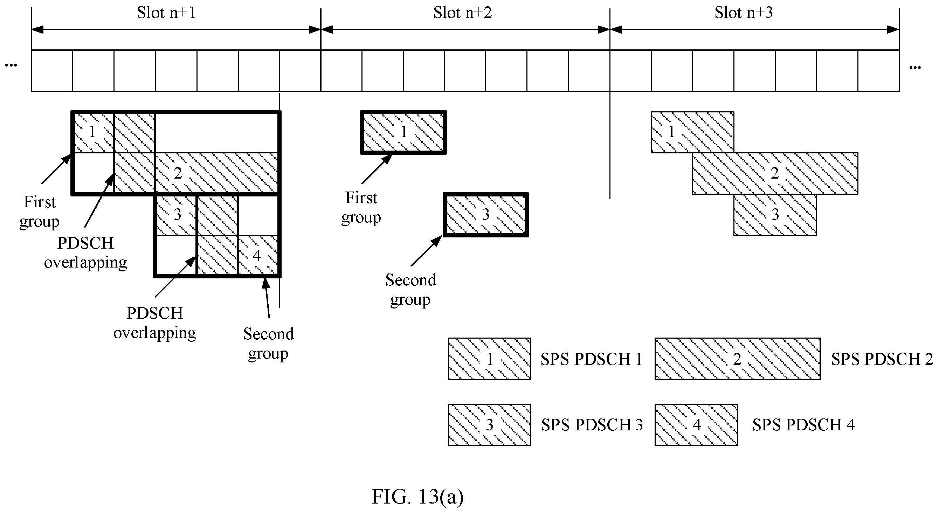

For example, as shown in FIG. 13(a), it is assumed that an SPS PDSCH 1, an SPS PDSCH 2, an SPS PDSCH 3, and an SPS PDSCH 4 in a slot n+1 are denoted as a PDSCH set. In the slot n+1, because an end symbol of the SPS PDSCH 1 is the earliest, that is, the 1^{st} ending PDSCH is the SPS PDSCH 1, the SPS PDSCH 1 and a PDSCH that overlaps the SPS PDSCH 1 are grouped into a first group based on the SPS PDSCH 1. Because the SPS PDSCH 1 overlaps the SPS PDSCH 2, the first group includes the SPS PDSCH 1 and the SPS PDSCH 2.

The SPS PDSCH 3 and the SPS PDSCH 4 are left, and the SPS PDSCH 3 and the SPS PDSCH 4 are denoted as a PDSCH set. In the slot n+1, because an end symbol of the SPS PDSCH 3 is the earliest, that is, the 1^{st} ending PDSCH is the SPS PDSCH 3, the SPS PDSCH 3 and a PDSCH that overlaps the SPS PDSCH 3 are grouped into a second group based on the SPS PDSCH 3. Because the SPS PDSCH 3 overlaps the SPS PDSCH 4, the second group includes the SPS PDSCH 3 and the SPS PDSCH 4.

Next, the terminal device selects the SPS PDSCH 1 with a smaller index in the first group and the SPS PDSCH 3 with a smaller index in the second group. Because the SPS PDSCH 1 and the SPS PDSCH 3 do not overlap in time domain, the PDSCH selection process ends.

In a slot n+2, because an end symbol of the SPS PDSCH 1 is the earliest, that is, the 1^{st} ending PDSCH is the SPS PDSCH 1, the SPS PDSCH 1 and a PDSCH that overlaps the SPS PDSCH 1 are grouped into a first group based on the SPS PDSCH 1. Because the SPS PDSCH 3 does not overlap the SPS PDSCH 1, the first group includes the SPS PDSCH 1.

The SPS PDSCH 3 is left. The SPS PDSCH 3 is denoted as a PDSCH set. In the slot n+2, because an end symbol of the SPS PDSCH 3 is the earliest, that is, the 1^{st} ending PDSCH is the SPS PDSCH 3, the SPS PDSCH 3 and a PDSCH that overlaps the SPS PDSCH 3 are grouped into a second group based on the SPS PDSCH 3. In this case, only the SPS PDSCH 3 is left, and the second group includes the SPS PDSCH 3.

Next, the terminal device selects the SPS PDSCH 1 with a smallest index in the first group and the SPS PDSCH 3 with a smallest index in the second group. Because the SPS PDSCH 1 and the SPS PDSCH 3 do not overlap in time domain, the PDSCH selection process ends.

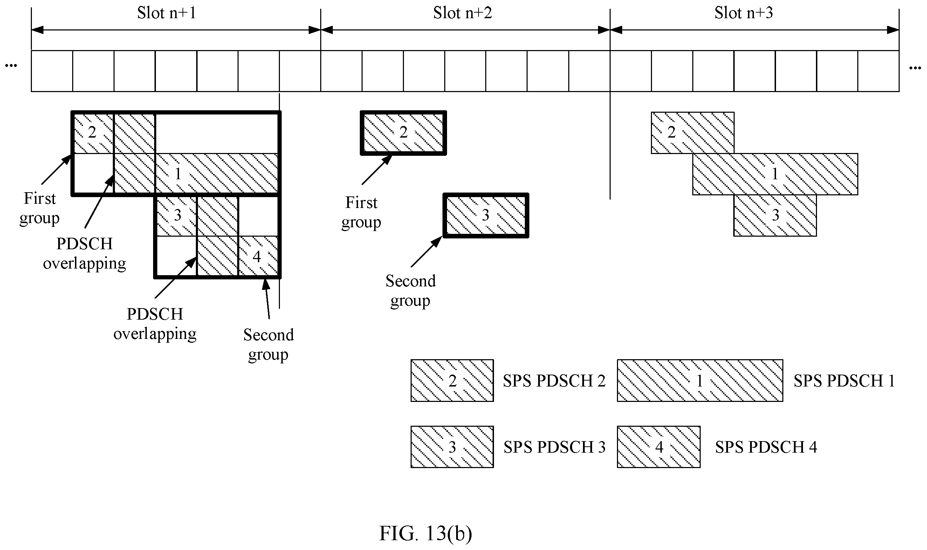

As shown in FIG. 13(b), an SPS PDSCH 1 with a smallest index in a first group and an SPS PDSCH 3 with a smallest index in a second group that are selected by the terminal device overlap, and a PDSCH continues to be selected according to the third possible implementation.

Specifically, the SPS PDSCH 1 and the SPS PDSCH 3 are denoted as a PDSCH set. In a slot n+1, because an end symbol of the SPS PDSCH 3 is the earliest, that is, the 1^{st} ending PDSCH is the SPS PDSCH 3, the SPS PDSCH 3 and a PDSCH that overlaps the SPS PDSCH 3 are grouped into a first group based on the SPS PDSCH 3. Because the SPS PDSCH 3 and the SPS PDSCH 1 overlap in time domain, the first group includes the SPS PDSCH 3 and the SPS PDSCH 1.

Next, the terminal device selects the SPS PDSCH 1 with a smaller index in the first group.

In a conventional technology, if one dynamically scheduled PDSCH overlaps a plurality of PDSCHs that have no corresponding PDCCHs, it is generally assumed that a priority of the dynamically scheduled PDSCH is higher than a priority of the PDSCH that has no corresponding PDCCH, and the dynamically scheduled PDSCH and the plurality of PDSCHs that have no corresponding PDCCHs are separately processed, to be specific, the dynamically scheduled PDSCH is grouped into one group, and the plurality of PDSCHs that have no corresponding PDCCHs are grouped into another group. If a PDSCH with a smallest index is selected from the plurality of PDSCHs that have no corresponding PDCCHs and overlaps the dynamically scheduled PDSCH, none of the plurality of PDSCHs that have no corresponding PDCCHs can be sent or received, resulting in a waste of resources.

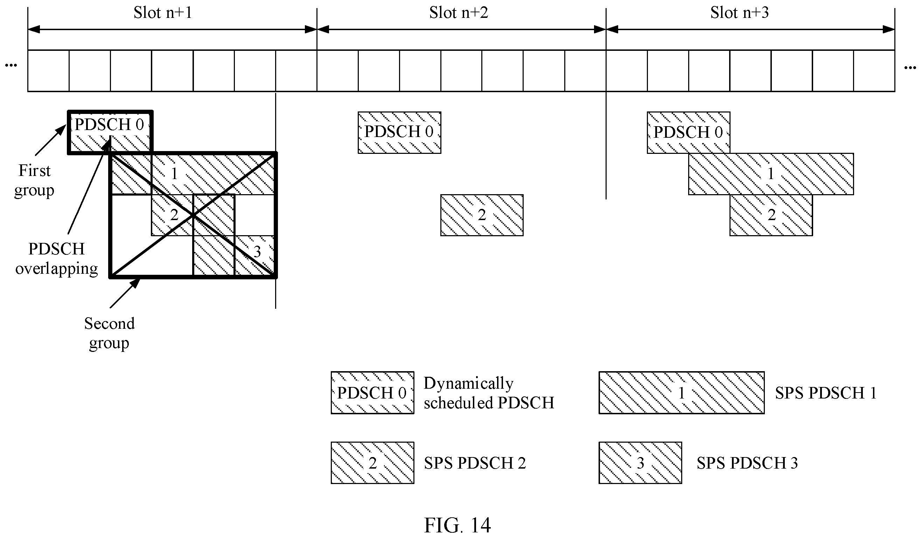

For example, as shown in FIG. 14, in a slot n+1, a PDSCH 0 is a dynamically scheduled PDSCH, and the terminal device groups an SPS PDSCH 1, an SPS PDSCH 2, and an SPS PDSCH 3 into one group. The terminal device selects the SPS PDSCH 1 with a smallest index. Because the SPS PDSCH 1 overlaps the PDSCH 0, none of the SPS PDSCH 1, the SPS PDSCH 2, and the SPS PDSCH 3 can be sent or received.

In a fourth possible implementation, the P PDSCHs further include a dynamically scheduled PDSCH. A manner in which the terminal device selects the M PDSCHs from the P PDSCHs is as follows: The terminal device groups the P PDSCHs into a plurality of PDSCH groups, where the plurality of PDSCH groups include a first PDSCH group and/or a second PDSCH group, and PDSCHs included in each PDSCH group overlap each other. The first PDSCH group includes a dynamically scheduled PDSCH and a PDSCH that has no corresponding PDCCH and that overlaps the dynamically scheduled PDSCH. Each of PDSCHs included in the second PDSCH group is a PDSCH that has no corresponding PDCCH. Then, the terminal device selects the dynamically scheduled PDSCH from the first PDSCH group, and/or selects, from the second PDSCH group, a PDSCH with a smallest identifier value that has no corresponding PDCCH. The M PDSCHs include a dynamically scheduled PDSCH and/or a PDSCH that has no corresponding PDCCH.

Optionally, the plurality of PDSCH groups include a plurality of first PDSCH groups and a plurality of second PDSCH groups. A quantity of first PDSCH groups and a quantity of second PDSCH groups are not limited herein.

In some embodiments, PDSCHs selected by the terminal device from the first PDSCH group and the second PDSCH group may also overlap. In this case, the terminal device may continue to select a PDSCH according to the fourth possible implementation, until the M PDSCHs that do not overlap each other are selected.

It is assumed that the terminal device selects N PDSCHs. If the N PDSCHs do not overlap each other, the terminal device does not need to perform selection, and N is equal to M.

If two of the N PDSCHs overlap in time domain, it indicates that an overlapping PDSCH exists in the PDSCHs selected by the terminal device. In this case, N is greater than M, and the terminal device continues to select a PDSCH by using the foregoing fourth possible implementation.

The foregoing process may also be understood as follows: The P PDSCHs further include a dynamically scheduled PDSCH, the M PDSCHs are M PDSCHs in N PDSCHs, each of the N PDSCHs belongs to one of N PDSCH groups, each PDSCH in the N PDSCH groups is one of the P PDSCHs, each of the P PDSCHs belongs to one of the N PDSCH groups, N is an integer greater than or equal to M and less than or equal to P, and PDSCHs in an i^{th} PDSCH group in the N PDSCH groups overlap each other. An i^{th} PDSCH in the N PDSCHs is a PDSCH in the i^{th} PDSCH group, and i is a positive integer less than or equal to N. When the i^{th} PDSCH group includes a dynamically scheduled PDSCH, the i^{th} PDSCH is the dynamically scheduled PDSCH; and/or when the i^{th} PDSCH group does not include a dynamically scheduled PDSCH, the i^{th} PDSCH is a PDSCH with a smallest identifier value in the i^{th} PDSCH group.

Optionally, if N is greater than M, the terminal device selects Q PDSCHs from the N PDSCHs according to the fourth possible implementation. If the Q PDSCHs selected by the terminal device do not overlap each other, the terminal device does not need to perform selection again. If at least two of the Q PDSCHs selected by the terminal device overlap each other, Q is greater than M, indicating that an overlapping PDSCH exists in the PDSCHs selected by the terminal device. The terminal device continues to select a PDSCH according to the fourth possible implementation, until PDSCHs selected by the terminal device do not overlap each other. These non-overlapping PDSCHs are the M selected PDSCHs.

The foregoing process may also be understood as follows: The M PDSCHs are M PDSCHs in Q PDSCHs, each of the Q PDSCHs belongs to one of Q PDSCH groups, each PDSCH in the Q PDSCH groups is one of the N PDSCHs, each of the N PDSCHs belongs to one of the Q PDSCH groups, and Q is an integer greater than or equal to M and less than N. PDSCHs in a j^{th} PDSCH group in the Q PDSCH groups overlap each other. A j^{th} PDSCH in the Q PDSCHs is a PDSCH in the j^{th} PDSCH group, and j is a positive integer less than or equal to Q. When the j^{th} PDSCH group includes a dynamically scheduled PDSCH, the j^{th} PDSCH is the dynamically scheduled PDSCH; and/or when the j^{th} PDSCH group does not include a dynamically scheduled PDSCH, the j^{th} PDSCH is a PDSCH with a smallest identifier value in the j^{th} PDSCH group.

For a manner of determining the N PDSCH groups, refer to descriptions in the foregoing third possible implementation. Details are not described again.

Compared with the first possible implementation and the second possible implementation in which the terminal device determines, through one-by-one comparison, whether there is an overlapping PDSCH, and selects a non-overlapping PDSCH, and consequently, calculation complexity of the terminal device is high, and power consumption is high, in the foregoing fourth possible implementation, because the dynamically scheduled PDSCH and the SPS PDSCH are uniformly processed, a processing procedure of the terminal device is simplified, calculation complexity and power consumption of the terminal device are reduced, and it can be ensured that as many PDSCHs that have no corresponding PDCCHs as possible are received, thereby improving resource utilization. In addition, because data can be received in time, a data transmission latency is reduced.

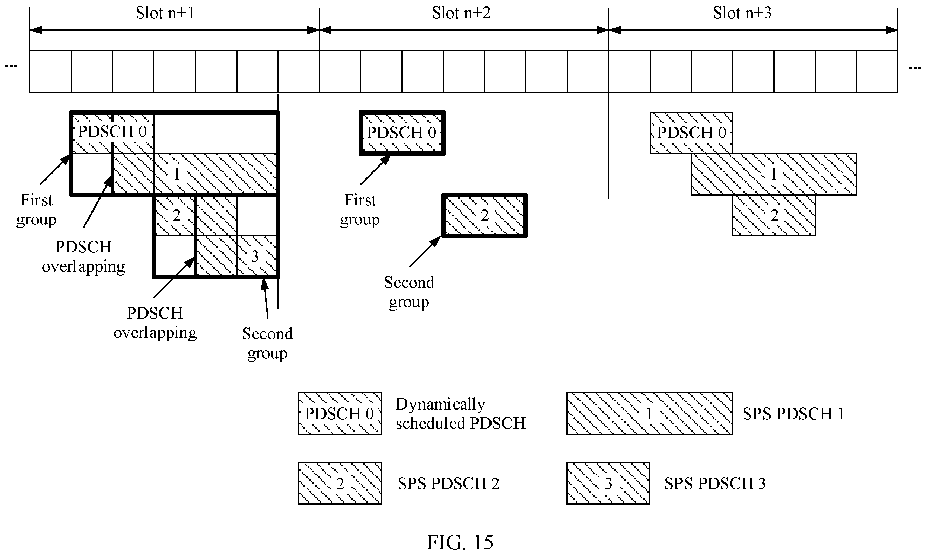

For example, as shown in FIG. 15, it is assumed that an SPS PDSCH 1, an SPS PDSCH 2, an SPS PDSCH 3, and a PDSCH 0 in a slot n+1 are denoted as a PDSCH set. In the slot n+1, because an end symbol of the PDSCH 0 is the earliest, that is, the 1^{st} ending PDSCH is the dynamically scheduled PDSCH 0, the PDSCH 0 and a PDSCH that overlaps the PDSCH 0 are grouped into a first group based on the PDSCH 0. Because the SPS PDSCH 1 overlaps the PDSCH 0, the first group includes the SPS PDSCH 1 and the PDSCH 0.

The SPS PDSCH 2 and the SPS PDSCH 3 are left, and the SPS PDSCH 2 and the SPS PDSCH 3 are denoted as a PDSCH set. In the slot n+1, because an end symbol of the SPS PDSCH 2 is the earliest, that is, the 1^{st} ending PDSCH is the SPS PDSCH 2, the SPS PDSCH 2 and a PDSCH that overlaps the SPS PDSCH 2 are grouped into a second group based on the SPS PDSCH 2. Because the SPS PDSCH 2 overlaps the SPS PDSCH 3, the second group includes the SPS PDSCH 2 and the SPS PDSCH 3.

Next, the terminal device selects the PDSCH 0 in the first group and the SPS PDSCH 2 with a smaller index in the second group. Because the PDSCH 0 and the SPS PDSCH 2 do not overlap in time domain, the PDSCH selection process ends.

In a slot n+2, because an end symbol of the PDSCH 0 is the earliest, that is, the 1^{st} ending PDSCH is the dynamically scheduled PDSCH 0, the PDSCH 0 and a PDSCH that overlaps the PDSCH 0 are grouped into a first group based on the PDSCH 0. Because the SPS PDSCH 2 does not overlap the PDSCH, the first group includes the PDSCH 0.

The SPS PDSCH 2 is left. The SPS PDSCH 2 is denoted as a PDSCH set. In the slot n+2, because an end symbol of the SPS PDSCH 2 is the earliest, that is, the 1^{st} ending PDSCH is the SPS PDSCH 2, the SPS PDSCH 2 and a PDSCH that overlaps the SPS PDSCH 2 are grouped into a second group based on the SPS PDSCH 2. In this case, only the SPS PDSCH 2 is left, and the second group includes the SPS PDSCH 2.

Next, the terminal device selects the PDSCH 0 in the first group and the SPS PDSCH 2 with a smallest index in the second group. Because the PDSCH 0 and the SPS PDSCH 2 do not overlap in time domain, the PDSCH selection process ends.

In a fifth possible implementation, the P PDSCHs further include a dynamically scheduled PDSCH. First, the terminal device selects, from the P PDSCHs, the dynamically scheduled PDSCH and a plurality of PDSCHs that have no corresponding PDCCHs and that do not overlap the dynamically scheduled PDSCH; and then selects, from the plurality of PDSCHs that have no corresponding PDCCHs and that do not overlap the dynamically scheduled PDSCH, a PDSCH with a smallest identifier that has no corresponding PDCCH. The M PDSCHs include the dynamically scheduled PDSCH and the PDSCH with the smallest identifier that has no corresponding PDCCH.

The foregoing process may also be understood as follows: The M PDSCHs include a dynamically scheduled PDSCH and R PDSCHs that have no corresponding PDCCHs, the R PDSCHs that have no corresponding PDCCHs are R PDSCHs with smallest identifiers that have no corresponding PDCCHs and that are not the dynamically scheduled PDSCH and a PDSCH that has no corresponding PDCCH and that overlaps the dynamically scheduled PDSCH in the P PDSCHs, and R is a positive integer less than M.

For a manner in which the terminal device selects the R PDSCHs with the smallest identifiers from the PDSCHs other than the dynamically scheduled PDSCH and the PDSCH that has no corresponding PDCCH and that overlaps the dynamically scheduled PDSCH in the P PDSCHs, refer to the manner of selecting the M PDSCHs from the P PDSCHs in the first possible implementation, the second possible implementation, or the third possible implementation. Details are not described again.

Optionally, if R is greater than 1, PDSCH identifiers included in the R PDSCHs are the same, and the identifiers are the smallest.

Optionally, the R PDSCHs with the smallest identifiers are PDSCHs whose identifiers are in ascending order, the R PDSCHs do not overlap, and the terminal device may receive data on the R PDSCHs.

It should be noted that, the PDSCH that has no corresponding PDCCH and that overlaps the dynamically scheduled PDSCH is not received from the network device.

Because the PDSCH that has no corresponding PDCCH and that overlaps the dynamically scheduled PDSCH is first canceled, and then a PDSCH with a smallest identifier in remaining PDSCHs that have no corresponding PDCCHs is received, it is ensured that as many PDSCHs that have no corresponding PDCCHs as possible are received, thereby improving resource utilization. In addition, because data can be received in time, a data transmission latency is reduced.

For example, as shown in FIG. 15, in the slot n+1, the SPS PDSCH 1 overlaps the PDSCH 0, and the terminal device does not receive the SPS PDSCH 1. The SPS PDSCH 2 and overlap SPS PDSCH 3 do not overlap the PDSCH 0. The SPS PDSCH 2 and the SPS PDSCH 3 are grouped into one group according to the third possible implementation, and the SPS PDSCH 2 with the smaller index is selected.Therefore, the terminal device receives the PDSCH 0 and the SPS PDSCH 2. Because the PDSCH 0 and the SPS PDSCH 2 do not overlap in time domain, the PDSCH selection process ends.

It may be understood that, to implement functions in the foregoing embodiments, the network device and the terminal device include corresponding hardware structures and/or software modules for performing the functions. A person skilled in the art should easily be aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

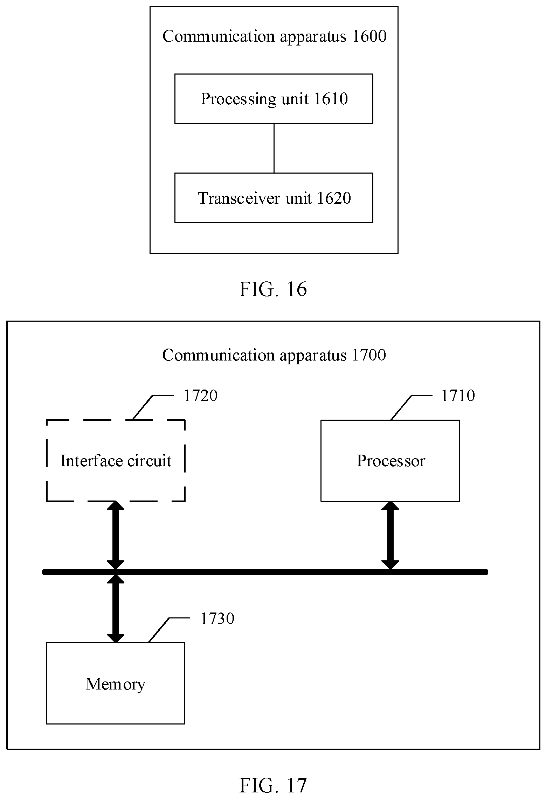

FIG. 16 and FIG. 17 each are a schematic diagram of a possible structure of a communication apparatus according to an embodiment of this application. The communication apparatus may be configured to implement functions of the terminal device or the network device in the foregoing method embodiments. Therefore, beneficial effects of the foregoing method embodiments can also be achieved. In embodiments of this application, the communication apparatus may be the terminal device 130 or the terminal device 140 shown in FIG. 1, may be the radio access network device 120 shown in FIG. 1, or may be a module (for example, a chip) used in the terminal device or the network device.

As shown in FIG. 16, the communication apparatus 1600 includes a processing unit 1610 and a transceiver unit 1620. If the communication apparatus 1600 is the terminal device, the processing unit 1610 is configured to determine P PDSCHs in a first time unit, where the P PDSCHs include a PDSCH that has no corresponding PDCCH, at least two of the P PDSCHs overlap in time domain, and P is an integer greater than 1; the transceiver unit 1620 is configured to receive data from a network device only on M PDSCHs in the P PDSCHs, where M is equal to 1, or M is an integer greater than 1 and less than P, the M PDSCHs do not overlap in time domain, a first PDSCH is a PDSCH other than the M PDSCHs in the P PDSCHs, and the terminal device does not receive the data from the network device on the first PDSCH; and the transceiver unit 1620 is further configured to send feedback information corresponding to the M PDSCHs to the network device.

If the communication apparatus 1600 is the network device, the processing unit 1610 is configured to determine P PDSCHs in a first time unit, where the P PDSCHs include a PDSCH that has no corresponding PDCCH, at least two of the P PDSCHs overlap in time domain, and P is an integer greater than 1; the transceiver unit 1620 is configured to send data to a terminal device only on M PDSCHs in the P PDSCHs, where M is equal to 1, or M is an integer greater than 1 and less than P, the M PDSCHs do not overlap in time domain, a first PDSCH is a PDSCH other than the M PDSCHs in the P PDSCHs, and data is not sent to the terminal device on the first PDSCH; and the transceiver unit 1620 is further configured to receive feedback information corresponding to the M PDSCHs from the terminal device.

The communication apparatus 1600 is configured to implement a function of the terminal device or the network device in the method embodiment shown in FIG. 9.

When the communication apparatus 1600 is configured to implement the function of the terminal device in the method embodiment shown in FIG. 9, the processing unit 1610 is configured to perform S903; and the transceiver unit 1620 is configured to perform S904 and S905.

When the communication apparatus 1600 is configured to implement the function of the network device in the method embodiment shown in FIG. 9, the processing unit 1610 is configured to perform S901; and the transceiver unit 1620 is configured to perform S902 and S906.

For more detailed descriptions of the processing unit 1610 and the transceiver unit 1620, directly refer to related descriptions of the method embodiment shown in FIG. 9. Details are not described herein again.

As shown in FIG. 17, the communication apparatus 1700 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to: store instructions to be executed by the processor 1710, store input data required by the processor 1710 to run instructions, or store data generated after the processor 1710 runs instructions.

When the communication apparatus 1700 is configured to implement the method shown in FIG. 9, the processor 1710 is configured to perform a function of the processing unit 1610, and the interface circuit 1720 is configured to perform a function of the transceiver unit 1620.

When the communication apparatus is a chip used in a terminal device, the chip in the terminal device implements a function of the terminal device in the foregoing method embodiment. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements a function of the network device in the foregoing method embodiment. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in this embodiment of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any conventional processor.

The method steps in embodiments of this application may be implemented by hardware, or may be implemented by executing software instructions by the processor. The software instructions may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded or executed on a computer, all or a part of the procedures or functions described in embodiments of this application are generated. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, the term "at least one" means one or more, and the term "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not intended to limit the scope of embodiments of this application. The sequence numbers of the foregoing processes do not mean an execution sequence, and the execution sequence of the processes should be determined based on functions and internal logic of the processes.

## Claims

1. A downlink data sending method, comprising:
determining (S901) P physical downlink shared channels, PDSCHs, in a first time unit, wherein the P PDSCHs comprise a PDSCH that has no corresponding physical downlink control channel, PDCCH, at least two of the P PDSCHs overlap in time domain, and P is an integer greater than 1;
sending data (S902) to a terminal device (130) only on M PDSCHs in the P PDSCHs, wherein M is equal to 1, or M is an integer greater than 1 and less than P, and the M PDSCHs do not overlap in time domain; and
receiving (S906) feedback information corresponding to the M PDSCHs from the terminal device (130); and
wherein a first PDSCH is the last repetition in PDSCH repetitions of first data, and the first PDSCH is a PDSCH other than the M PDSCHs in the P PDSCHs and overlaps at least one of the M PDSCHs in time domain; and the method further comprises:
when the first data is sent to the terminal device (130) on a second PDSCH, receiving feedback information for the first data from the terminal device (130) in a feedback time unit corresponding to the first PDSCH, wherein the second PDSCH is any repetition of the first data before the first PDSCH.

2. The method according to claim 1, wherein when second data is sent to the terminal device (130) on a fourth PDSCH, the M PDSCHs comprise a third PDSCH, wherein the third PDSCH and the fourth PDSCH each are one repetition in PDSCH repetitions of the second data, and a time domain position of the third PDSCH is after a time domain position of the fourth PDSCH.

3. The method according to claim 1, wherein when a fifth PDSCH is not sent to the terminal device (130), a first PDSCH is not sent to the terminal device (130), wherein the fifth PDSCH is the 1^{st} repetition in PDSCH repetitions, the first PDSCH is one repetition after the 1^{st} repetition in the PDSCH repetitions, and a time domain position of the first PDSCH is after a time domain position of the fifth PDSCH.

4. The method according to any one of claims 1 to 3, wherein the P PDSCHs further comprise a dynamically scheduled PDSCH, the M PDSCHs comprise the dynamically scheduled PDSCH and R PDSCHs that have no corresponding PDCCHs, the R PDSCHs that have no corresponding PDCCHs are R PDSCHs with smallest identifiers that have no corresponding PDCCHs and that are not the dynamically scheduled PDSCH and a PDSCH that has no corresponding PDCCH and that overlaps the dynamically scheduled PDSCH in the P PDSCHs, and R is less than M.

5. The method according to claim 4, wherein the PDSCH that has no corresponding PDCCH and that overlaps the dynamically scheduled PDSCH is not sent to the terminal device (130).

6. The method according to one of the preceding claims, wherein the data is sent (S902) to the terminal in a semi-persistent scheduling, SPS, manner.

7. A downlink data receiving method, comprising:
determining (S903) P physical downlink shared channels, PDSCHs, in a first time unit, wherein the P PDSCHs comprise a PDSCH that has no corresponding physical downlink control channel, PDCCH, at least two of the P PDSCHs overlap in time domain, and P is an integer greater than 1;
receiving (S904) data from a network device (110) only on M PDSCHs in the P PDSCHs, wherein M is equal to 1, or M is an integer greater than 1 and less than P, and the M PDSCHs do not overlap in time domain; and
sending (S905) feedback information corresponding to the M PDSCHs to the network device (110) and
wherein a first PDSCH is the last repetition in PDSCH repetitions of first data, and the first PDSCH is a PDSCH other than the M PDSCHs in the P PDSCHs and overlaps at least one of the M PDSCHs in time domain; and the method further comprises:
when the first data from the network device (110) is received on a second PDSCH, sending feedback information for the first data to the network device (110) in a feedback time unit corresponding to the first PDSCH, wherein the second PDSCH is any repetition of the first data before the first PDSCH.

8. The method according to claim 7, wherein the receiving (S904) data from a network device (110) only on M PDSCHs in the P PDSCHs comprises:
step 1: receiving data on a target semi-persistent scheduling, SPS, PDSCH, wherein the target SPS PDSCH is a PDSCH corresponding to an SPS configuration with a smallest SPS index in the first time unit;
step 2: skipping receiving an SPS PDSCH that is in the first time unit and that overlaps the target SPS PDSCH in time domain; and
repeating step 1 and step 2 until there is no active SPS PDSCH in the first time unit, or until a quantity of received data or a quantity of received PDSCHs reaches a capability of the terminal device (130), and stopping receiving a PDSCH.

9. The method according to any one of claims 7 to 8, wherein the P PDSCHs further comprise a dynamically scheduled PDSCH, the M PDSCHs comprise the dynamically scheduled PDSCH and R PDSCHs that have no corresponding PDCCHs, the R PDSCHs that have no corresponding PDCCHs are R PDSCHs with smallest identifiers that have no corresponding PDCCHs and that are not the dynamically scheduled PDSCH and a PDSCH that has no corresponding PDCCH and that overlaps the dynamically scheduled PDSCH in the P PDSCHs, and R is less than M.

10. The method according to claim 9, wherein the PDSCH that has no corresponding PDCCH and that overlaps the dynamically scheduled PDSCH is not received from the network device (110).

11. The method according to one of the claims 7 to 10, wherein the data is received (S904) from the network device (110) in a semi-persistent scheduling, SPS, manner.

12. A communication apparatus (1600, 1700), comprising means for performing the method according to any one of claims 1 to 11.

13. A computer-readable storage medium having stored thereon a computer program, the computer program comprising instructions which, when the program is executed by a computer, cause the computer to carry out the method according to any one of claims 1 to 11.

## Patentansprüche

1. Verfahren zum Senden von Downlink-Daten, umfassend:
Bestimmen (S901) von P physikalischen gemeinsam genutzten Downlink-Kanälen, PDSCHs, in einer ersten Zeiteinheit, wobei die P PDSCHs einen PDSCH umfassen, der keinen entsprechenden physikalischen Downlink-Steuerkanal, PDCCH, aufweist, sich mindestens zwei der P PDSCHs im Zeitbereich überlappen und P eine Ganzzahl größer als 1 ist;
Senden von Daten (S902) an eine Endgerätevorrichtung (130) nur auf M PDSCHs in den P PDSCHs, wobei M gleich 1 ist oder M eine Ganzzahl größer als 1 und kleiner als P ist und sich die M PDSCHs im Zeitbereich nicht überlappen; und
Empfangen (S906) von Rückkopplungsinformationen entsprechend den M PDSCHs von der Endgerätevorrichtung (130); und
wobei ein erster PDSCH die letzte Wiederholung in PDSCH-Wiederholungen erster Daten ist, und der erste PDSCH ein PDSCH ist, der sich von den M PDSCHs in den P PDSCHs unterscheidet und sich im Zeitbereich mit mindestens einem der M PDSCHs überlappt;
und das Verfahren ferner Folgendes umfasst:
wenn die ersten Daten auf einem zweiten PDSCH an die Endgerätevorrichtung (130) gesendet werden, Empfangen von Rückkopplungsinformationen für die ersten Daten von der Endgerätevorrichtung (130) in einer Rückkopplungszeiteinheit entsprechend dem ersten PDSCH, wobei der zweite PDSCH eine beliebige Wiederholung der ersten Daten vor dem ersten PDSCH ist.

2. Verfahren nach Anspruch 1, wobei, wenn zweite Daten auf einem vierten PDSCH an die Endgerätevorrichtung (130) gesendet werden, die M PDSCHs einen dritten PDSCH umfassen, wobei der dritte PDSCH und der vierte PDSCH jeweils eine Wiederholung in PDSCH-Wiederholungen der zweiten Daten sind und eine Zeitbereichsposition des dritten PDSCH nach einer Zeitbereichsposition des vierten PDSCH liegt.

3. Verfahren nach Anspruch 1, wobei, wenn kein fünfter PDSCH an die Endgerätevorrichtung (130) gesendet wird, kein erster PDSCH an die Endgerätevorrichtung (130) gesendet wird, wobei der fünfte PDSCH die 1. Wiederholung in PDSCH-Wiederholungen ist, der erste PDSCH eine Wiederholung nach der 1. Wiederholung in den PDSCH-Wiederholungen ist und eine Zeitbereichsposition des ersten PDSCH nach einer Zeitbereichsposition des fünften PDSCH liegt.

4. Verfahren nach einem der Ansprüche 1 bis 3, wobei die P PDSCHs ferner einen dynamisch geplanten PDSCH umfassen, die M PDSCHs den dynamisch geplanten PDSCH und R PDSCHs umfassen, die keine entsprechenden PDCCHs aufweisen, die R PDSCHs, die keine entsprechenden PDCCHs aufweisen, R PDSCHs mit kleinsten Kennungen, die keine entsprechenden PDCCHs aufweisen und die nicht der dynamisch geplante PDSCH sind, und ein PDSCH sind, der keinen entsprechenden PDCCH aufweist und der den dynamisch geplanten PDSCH in den P PDSCHs überlappt, und R kleiner als M ist.

5. Verfahren nach Anspruch 4, wobei der PDSCH, der keinen entsprechenden PDCCH aufweist und der den dynamisch geplanten PDSCH überlappt, nicht an die Endgerätevorrichtung (130) gesendet wird.

6. Verfahren nach einem der vorhergehenden Ansprüche, wobei die Daten in der Weise einer semi-persistenten Planung, SPS, an die Endgerätevorrichtung gesendet werden (S902).

7. Verfahren zum Empfangen von Downlink-Daten, umfassend:
Bestimmen (S903) von P physikalischen gemeinsam genutzten Downlink-Kanälen, PDSCHs, in einer ersten Zeiteinheit, wobei die P PDSCHs einen PDSCH umfassen, der keinen entsprechenden physikalischen Downlink-Steuerkanal, PDCCH, aufweist, sich mindestens zwei der P PDSCHs im Zeitbereich überlappen und P eine Ganzzahl größer als 1 ist;
Empfangen (S904) von Daten von einer Endgerätevorrichtung (110) nur auf M PDSCHs in den P PDSCHs, wobei M gleich 1 ist oder M eine Ganzzahl größer als 1 und kleiner als P ist und sich die M PDSCHs im Zeitbereich nicht überlappen; und
Senden (S905) von Rückkopplungsinformationen entsprechend den M PDSCHs an die Netzwerkvorrichtung (110) und
wobei ein erster PDSCH die letzte Wiederholung in PDSCH-Wiederholungen erster Daten ist, und der erste PDSCH ein PDSCH ist, der sich von den M PDSCHs in den P PDSCHs unterscheidet und sich im Zeitbereich mit mindestens einem der M PDSCHs überlappt;
und das Verfahren ferner Folgendes umfasst:
wenn die ersten Daten von der Netzwerkvorrichtung (110) auf einem zweiten PDSCH empfangen werden, Senden von Rückkopplungsinformationen für die ersten Daten an die Endgerätevorrichtung (110) in einer Rückkopplungszeiteinheit entsprechend dem ersten PDSCH, wobei der zweite PDSCH eine beliebige Wiederholung der ersten Daten vor dem ersten PDSCH ist.

8. Verfahren nach Anspruch 7, wobei das Empfangen (S904) von Daten von einer Netzwerkvorrichtung (110) nur auf M PDSCHs in den P PDSCHs Folgendes umfasst:
Schritt 1: Empfangen von Daten auf einem PDSCH für semipersistente Zielplanung, Ziel-SPS-PDSCH, wobei der Ziel-SPS-PDSCH ein PDSCH entsprechend einer SPS-Konfiguration mit einem kleinsten SPS-Index in der ersten Zeiteinheit ist;
Schritt 2: Überspringen des Empfangens eines SPS PDSCH, der sich in der ersten Zeiteinheit befindet und im Zeitbereich den Ziel-SPS-PDSCH überlappt; und
Wiederholen von Schritt 1 und Schritt 2, bis in der ersten Zeiteinheit kein aktiver SPS-PDSCH vorhanden ist oder bis eine Menge empfangener Daten oder eine Menge empfangener PDSCHs eine Leistungsfähigkeit der Endgerätevorrichtung (130) erreicht, und Anhalten des Empfangens eines PDSCH.

9. Verfahren nach einem der Ansprüche 7 bis 8, wobei die P PDSCHs ferner einen dynamisch geplanten PDSCH umfassen, die M PDSCHs den dynamisch geplanten PDSCH und R PDSCHs umfassen, die keine entsprechenden PDCCHs aufweisen, die R PDSCHs, die keine entsprechenden PDCCHs aufweisen, R PDSCHs mit kleinsten Kennungen, die keine entsprechenden PDCCHs aufweisen und die nicht der dynamisch geplante PDSCH sind, und ein PDSCH sind, der keinen entsprechenden PDCCH aufweist und der den dynamisch geplanten PDSCH in den P PDSCHs überlappt, und R kleiner als M ist.

10. Verfahren nach Anspruch 9, wobei der PDSCH, der keinen entsprechenden PDCCH aufweist und der den dynamisch geplanten PDSCH überlappt, nicht von der Netzwerkvorrichtung (110) empfangen wird.

11. Verfahren nach einem der Ansprüche 7 bis 10, wobei die Daten von der Netzwerkvorrichtung (110) in einer Weise der semi-persistenten Planung, SPS-Weise, empfangen (S904) werden.

12. Kommunikationseinrichtung (1600, 1700), umfassend Mittel zum Durchführen des Verfahrens nach einem der Ansprüche 1 bis 11.

13. Computerlesbares Speichermedium, auf dem ein Computerprogramm gespeichert ist, wobei das Computerprogramm Anweisungen umfasst, welche bei Ausführung des Programms durch einen Computer bewirken, dass der Computer das Verfahren nach einem der Ansprüche 1 bis 11 durchführt.

## Revendications

1. Procédé d'envoi de données de liaison descendante, comprenant :
la détermination (S901) de P canaux partagés de liaison descendante physiques, PDSCH, dans une première unité de temps, dans lequel les P PDSCH comprennent un PDSCH qui n'a pas de canal de commande de liaison descendante physique, PDCCH, correspondant, au moins deux des P PDSCH se chevauchent dans le domaine temporel, et P est un entier supérieur à 1 ;
l'envoi des données (S902) à un dispositif terminal (130) uniquement sur M PDSCH dans les P PDSCH, dans lequel M est égal à 1, ou M est un entier supérieur à 1 et inférieur à P, et les M PDSCH ne se chevauchent pas dans le domaine temporel ; et
la réception (S906) des informations de rétroaction correspondant aux M PDSCH en provenance du dispositif terminal (130) ; et
dans lequel un premier PDSCH est la dernière répétition dans les répétitions PDSCH de premières données, et le premier PDSCH est un PDSCH autre que les M PDSCH dans les P PDSCH et chevauche au moins l'un des M PDSCH dans le domaine temporel ; et le procédé comprend également :
lorsque les premières données sont envoyées au dispositif terminal (130) sur un deuxième PDSCH, la réception des informations de rétroaction pour les premières données en provenance du dispositif terminal (130) dans une unité de temps de rétroaction correspondant au premier PDSCH, dans lequel le deuxième PDSCH est une répétition quelconque des premières données avant le premier PDSCH.

2. Procédé selon la revendication 1, dans lequel, lorsque des secondes données sont envoyées au dispositif terminal (130) sur un quatrième PDSCH, les M PDSCH comprennent un troisième PDSCH, dans lequel le troisième PDSCH et le quatrième PDSCH sont chacun une répétition dans les répétitions PDSCH des secondes données, et une position de domaine temporel du troisième PDSCH est postérieure à une position de domaine temporel du quatrième PDSCH.

3. Procédé selon la revendication 1, dans lequel lorsqu'un cinquième PDSCH n'est pas envoyé au dispositif terminal (130), un premier PDSCH n'est pas envoyé au dispositif terminal (130), dans lequel le cinquième PDSCH est la 1^{re} répétition dans les répétitions de PDSCH, le premier PDSCH est une répétition après la 1^{re} répétition dans les répétitions de PDSCH, et une position de domaine temporel du premier PDSCH est postérieure à une position de domaine temporel du cinquième PDSCH.

4. Procédé selon l'une quelconque des revendications 1 à 3, dans lequel les P PDSCH comprennent également un PDSCH planifié dynamiquement, les M PDSCH comprennent le PDSCH planifié dynamiquement et R PDSCH qui n'ont pas de PDCCH correspondant, les R PDSCH qui n'ont pas de PDCCH correspondant sont des R PDSCH avec les plus petits identifiants qui n'ont pas de PDCCH correspondant et qui ne sont pas le PDSCH planifié dynamiquement et un PDSCH qui n'a pas de PDCCH correspondant et qui chevauche le PDSCH planifié dynamiquement dans les P PDSCH, et R est inférieur à M.

5. Procédé selon la revendication 4, dans lequel le PDSCH qui n'a pas de PDCCH correspondant et qui chevauche le PDSCH planifié dynamiquement n'est pas envoyé au dispositif terminal (130).

6. Procédé selon l'une des revendications précédentes, dans lequel les données sont envoyées (S902) au terminal selon une manière de planification semi-persistante, SPS.

7. Procédé de réception de données de liaison descendante, comprenant :
la détermination (S903) de P canaux partagés de liaison descendante physiques, PDSCH, dans une première unité de temps, dans lequel les P PDSCH comprennent un PDSCH qui n'a pas de canal de commande de liaison descendante physique, PDCCH, correspondant, au moins deux des P PDSCH se chevauchent dans le domaine temporel, et P est un entier supérieur à 1 ;
la réception (S904) des données en provenance d'un dispositif de réseau (110) uniquement sur M PDSCH dans les P PDSCH, dans lequel M est égal à 1, ou M est un entier supérieur à 1 et inférieur à P, et les M PDSCH ne se chevauchent pas dans le domaine temporel ; et
l'envoi (S905) des informations de rétroaction correspondant aux M PDSCH au dispositif de réseau (110) et
dans lequel un premier PDSCH est la dernière répétition dans les répétitions PDSCH de premières données, et le premier PDSCH est un PDSCH autre que les M PDSCH dans les P PDSCH et chevauche au moins l'un des M PDSCH dans le domaine temporel ; et le procédé comprend également :
lorsque les premières données en provenance du dispositif de réseau (110) sont reçues sur un deuxième PDSCH, l'envoi des informations de rétroaction pour les premières données au dispositif de réseau (110) dans une unité de temps de rétroaction correspondant au premier PDSCH, dans lequel le deuxième PDSCH est une répétition quelconque des premières données avant le premier PDSCH.

8. Procédé selon la revendication 7, dans lequel la réception (S904) de données provenant d'un dispositif de réseau (110) uniquement sur M PDSCH dans les P PDSCH comprend :
étape 1 : la réception de données sur un PDSCH de planification semi-persistante, SPS, cible, dans lequel le PDSCH SPS cible est un PDSCH correspondant à une configuration SPS avec un plus petit indice SPS dans la première unité de temps ;
étape 2 : le fait d'ignorer la réception d'un PDSCH SPS qui se trouve dans la première unité de temps et qui chevauche le PDSCH SPS cible dans le domaine temporel ; et
la répétition de l'étape 1 et de l'étape 2 jusqu'à ce qu'il n'y ait plus de PDSCH SPS actif dans la première unité de temps, ou jusqu'à ce qu'une quantité de données reçues ou une quantité de PDSCH reçus atteigne une capacité du dispositif terminal (130), et l'arrêt de la réception d'un PDSCH.

9. Procédé selon l'une quelconque des revendications 7 à 8, dans lequel les P PDSCH comprennent également un PDSCH planifié dynamiquement, les M PDSCH comprennent le PDSCH planifié dynamiquement et R PDSCH qui n'ont pas de PDCCH correspondant, les R PDSCH qui n'ont pas de PDCCH correspondant sont des R PDSCH avec les plus petits identifiants qui n'ont pas de PDCCH correspondant et qui ne sont pas le PDSCH planifié dynamiquement et un PDSCH qui n'a pas de PDCCH correspondant et qui chevauche le PDSCH planifié dynamiquement dans les P PDSCH, et R est inférieur à M.

10. Procédé selon la revendication 9, dans lequel le PDSCH qui n'a pas de PDCCH correspondant et qui chevauche le PDSCH planifié dynamiquement n'est pas reçu en provenance du dispositif de réseau (110).

11. Procédé selon l'une des revendications 7 à 10, dans lequel les données sont reçues (S904) en provenance du dispositif de réseau (110) selon une manière de planification semi-persistante, SPS.

12. Appareil de communication (1600, 1700), comprenant un moyen pour exécuter le procédé selon l'une quelconque des revendications 1 à 11.

13. Support de stockage lisible par ordinateur sur lequel est stocké un programme informatique, le programme informatique comprenant des instructions qui, lorsque le programme est exécuté par un ordinateur, amènent l'ordinateur à mettre en œuvre le procédé selon l'une quelconque des revendications 1 à 11.
